(19) Europäisches Patentamt
European Patent Office
Office européen des brevets

(11) **EP 3 996 449 B1**

(12) **EUROPEAN PATENT SPECIFICATION**

(45) Date of publication and mention of the grant of the patent:
**28.08.2024 Bulletin 2024/35**

(21) Application number: **19938577.4**

(22) Date of filing: **25.07.2019**

(51) International Patent Classification (IPC):
*H04W 72/566* (2023.01)    *H04W 72/1268* (2023.01)
*H04W 72/21* (2023.01)

(52) Cooperative Patent Classification (CPC):
**H04W 72/569;** H04W 72/1268; H04W 72/21

(86) International application number:
**PCT/CN2019/097790**

(87) International publication number:
**WO 2021/012284 (28.01.2021 Gazette 2021/04)**

(54) **UPLINK INFORMATION TRANSMISSION METHOD AND DEVICE, AND STORAGE MEDIUM**

VERFAHREN UND VORRICHTUNG ZUR UPLINK-INFORMATIONSÜBERTRAGUNG UND SPEICHERMEDIUM

PROCÉDÉ ET DISPOSITIF DE TRANSMISSION D'INFORMATIONS DE LIAISON MONTANTE, ET SUPPORT D'INFORMATIONS

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(43) Date of publication of application:
**11.05.2022 Bulletin 2022/19**

(73) Proprietor: **GUANGDONG OPPO MOBILE TELECOMMUNICATIONS CORP., LTD.**
**Dongguan, Guangdong 523860 (CN)**

(72) Inventors:
• **XU, Jing**
  **Dongguan, Guangdong 523860 (CN)**
• **LIN, Yanan**
  **Dongguan, Guangdong 523860 (CN)**

(74) Representative: **RGTH**
**Patentanwälte PartGmbB**
**Neuer Wall 10**
**20354 Hamburg (DE)**

(56) References cited:
**CN-A- 108 811 135    US-A1- 2019 215 086**

• **HUAWEI ET AL: "Discussion on partially overlapped PUCCH and PUSCH", vol. RAN WG1, no. Athens, Greece; 20180226 - 20180302, 17 February 2018 (2018-02-17), XP051397762, Retrieved from the Internet <URL:http://www.3gpp.org/ftp/tsg%5Fran/WG1%5FRL1/TSGR1%5F92/Docs/> [retrieved on 20180217]**
• **SONY: "Considerations on UL Intra-UE Tx Multiplexing", vol. RAN WG1, no. Athens, Greece; 20190225 - 20190301, 16 February 2019 (2019-02-16), XP051599877, Retrieved from the Internet <URL:http://www.3gpp.org/ftp/tsg%5Fran/WG1%5FRL1/TSGR1%5F96/Docs/R1%2D1902182%2Ezip> [retrieved on 20190216]**
• **INTERDIGITAL INC: "UCI Enhancements for eURLLC", vol. RAN WG1, no. Reno, USA; 20190413 - 20190417, 4 May 2019 (2019-05-04), XP051709220, Retrieved from the Internet <URL:http://www.3gpp.org/ftp/tsg%5Fran/WG1%5FRL1/TSGR1%5F97/Docs/R1%2D1907194%2Ezip> [retrieved on 20190504]**

**(Cont. next page)**

- NOKIA ET AL: "On intra-UE DL/UL prioritization for NR URLLC", vol. RAN WG1, no. Athens, Greece; 20190225 - 20190301, 15 February 2019 (2019-02-15), XP051599611, Retrieved from the Internet <URL:http://www.3gpp.org/ftp/tsg%5Fran/WG1%5FRL1/TSGR1%5F96/Docs/R1%2D1901917%2Ezip> [retrieved on 20190215]
- CATT: "UL control enhancements for URLLC", vol. RAN WG1, no. Xi'an, China; 20190408 - 20190412, 3 April 2019 (2019-04-03), XP051707434, Retrieved from the Internet <URL:http://www.3gpp.org/ftp/tsg%5Fran/WG1%5FRL1/TSGR1%5F96b/Docs/R1%2D1905360%2Ezip> [retrieved on 20190403]
- QUALCOMM INCORPORATED: "Summary of remaining issues for UCI piggyback on PUSCH", 3GPP TSG RAN WG1 MEETING #92; R1-1803332 SUMMARY OF REMAINING ISSUES FOR UCI MULTIPLEXING ON PUSCH - VERSION 3, 3RD GENERATION PARTNERSHIP PROJECT (3GPP), SOPHIA-ANTIPOLIS CEDEX ; FRANCE, 27 February 2018 (2018-02-27), Athens, Greece; 20180226 - 20180302, XP051398480
- HUAWEI, HISILICON: "Discussion on partially overlapped PUCCH and PUSCH", 3GPP TSG RAN WG1 MEETING #92; R1-1801788, 3RD GENERATION PARTNERSHIP PROJECT (3GPP), SOPHIA-ANTIPOLIS CEDEX ; FRANCE, 17 February 2018 (2018-02-17), Athens, Greece; 20180226 - 20180302, XP051397762

**Description**

TECHNICAL FIELD

The present disclosure relates to mobile communication technology, and more particularly, to an uplink information transmission method, device and storage medium.

BACKGROUND

In the related art, the high-priority services such as Ultra-reliable low latency (URLLC) service are involved in the communication system. However, different types of services are not differentiated, so that transmission reliability of similar high-priority services cannot be guaranteed. R1-1907194, InterDigital, "UCI Enhancements for eURLLC", 3GPP TSG RAN WG1 #97, 13-17 April 2019, relates to several proposals to make further progress on HARQ-ACK reporting and on how to specify handling of resource collisions between UL data/control transmissions, where proposals include that HARQ-ACK is multiplexed on PUSCH of equal or lower priority with PUSCH duration less than x symbols, otherwise PUSCH is dropped, and includes that SR is multiplexed on PUSCH of lower priority with PUSCH duration less than y symbols, otherwise PUSCH is dropped. R1-1905360, CATT, "UL control enhancements for URLLC", 3GPP TSG RAN WG1 Meeting #96bis, 8-12 April 2019, relates to possible PHY enhancements to adequately support Rel-16 URLLC use cases, some proposals may be adopted for enhanced HARQ-ACK feedback and UCI multiplexing, the proposal includes that for a UE supporting URLLC and non-URLLC traffics, consider enhancements to UCI multiplexed on PUSCH based on independent beta offsets for URLLC and non-URLLC PUSCH.

SUMMARY

Embodiments of the present disclosure provide a method and a device for transmitting uplink information, and a storage medium, which can ensure transmission reliability of a high-priority service. The invention is set out in the appended set of claims. Any examples or embodiments that do not fall within the scope of the appended claims are non-claimed embodiments, which are presented only as information.

BRIEF DESCRIPTION OF THE DRAWINGS

FIG. 1 is a schematic diagram of an optional timing relationship not being part of the invention.

FIG. 2 is a schematic diagram of an optional timing relationship not being part of the invention.

FIG. 3 is a schematic diagram of an optional structure of a communication system not being part of the invention.

FIG. 4A is a schematic diagram of an optional processing flow of a method for transmitting uplink information according to an embodiment of the present disclosure.

FIG. 4B is a schematic diagram of an optional processing flow of a method for transmitting uplink information according to an embodiment of the present disclosure.

FIG. 5 is an optional schematic diagram of switching the time domain overlap according to an embodiment of the present disclosure.

FIG. 6 is a schematic diagram of an optional timing relationship according to an embodiment of the present disclosure.

FIG. 7 is a schematic diagram of an optional timing relationship according to an embodiment of the present disclosure.

FIG. 8 is a schematic diagram of an optional UCI sorting not being part of the invention.

FIG. 9 is a schematic diagram of an optional UCI sorting according to an embodiment of the present disclosure.

FIG. 10 is a schematic diagram of an optional UCI sorting according to an embodiment of the present disclosure.

FIG. 11 is a schematic diagram of optional structures of a terminal device and a network device according to an embodiment of the present disclosure.

FIG. 12 is a schematic diagram of an optional processing flow of a method for transmitting uplink information according to an embodiment of the present disclosure.

FIG. 13 is a schematic diagram of an optional processing flow of a method for transmitting uplink information according to an embodiment of the present disclosure.

FIG. 14 is a schematic diagram of an optional structure of an information transmission device not being part of the invention.

FIG. 15 is a schematic diagram of an optional structure of an electronic device according to an embodiment of the present disclosure.

DETAILED DESCRIPTION

For a more detailed understanding of the features and technical content of the embodiments of the disclosure, the implementation of the embodiments of the disclosure will be described in detail below with reference to the accompanying drawings.

Before describing the method for transmitting the uplink information provided in the embodiment of the present disclosure in detail, the multiplexing of a PUCCH and a PUSCH is briefly described firstly.

In a New Radio (NR) system or NR network, in order to reduce the intermodulation interference of the uplink transmission of the user equipment (UE), when the PUCCH and the PUSCH overlap in time domain, two transmission manners, i.e., discarding the PUSCH or carrying the Uplink Control Information (UCI) in the PUCCH on the PUSCH, are supported.

In an NR system or NR network, the flexibility of the PUCCH and PUSCH architecture design makes their start symbol and end symbol not necessarily aligned. In order to ensure that the UE has sufficient processing time to be able to multiplex the UCI and data, a fixed timing requirement must be met between the PUCCH and the PUSCH, so that the PUCCH can be multiplexed to the PUSCH, otherwise the UE will discard the PUSCH.

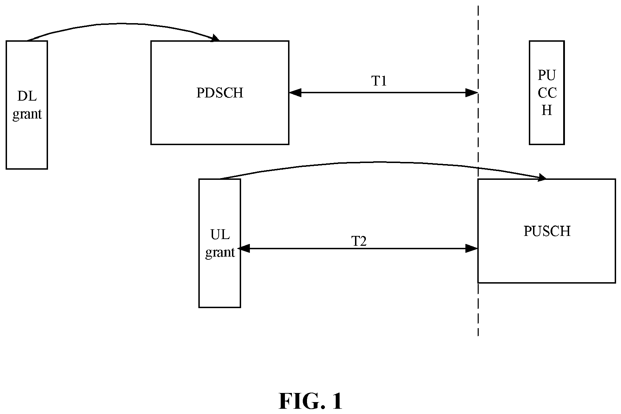

As illustrated in FIG. 1, for a single slot PUCCH (non-repeating PUCCH), the fixed timing requirement that must be met for multiplexing the PUCCH with the PUSCH include the following two timing requirements.

First timing requirement

The time difference (e.g., T1 illustrated in FIG. 1) between the first Orthogonal Frequency Division Multiplexing (OFDM) symbol of the earliest transmitted channel of the PUCCH and PUSCH overlapped in time domain and the last OFDM symbol of the PDSCH scheduled by the DCI scheduling HARQ-ACK is longer than N1+1 OFDM symbols. N1 is the capability of the UE to process the PDSCH as reported by the UE.

Second Timing Requirements

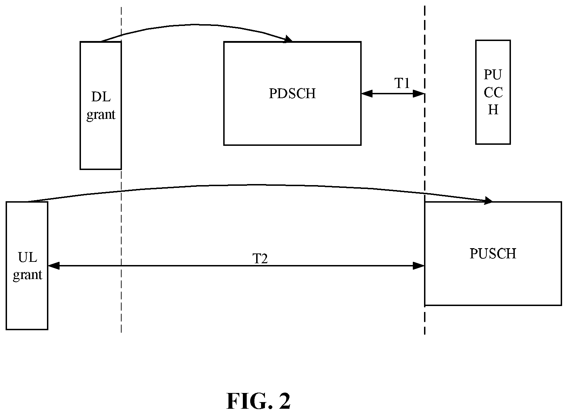

The time difference (e.g., T2 illustrated in FIG. 2) between the first OFDM symbol of the earliest transmitted channel of the PUSCH and PUSCH overlapped in time domain and the last OFDM symbol of the latest DCI (DCI for scheduling the PUSCH or DCI for scheduling the PUCCH) is greater than N2+1 symbols. N2 is the time for the UE to prepare the PUSCH as reported by the UE.

When the PUCCH with multiple time slots collide with the PUSCH in the time domain, in order to ensure the transmission performance of the PUCCH with multiple time slots, the PUSCH is discarded directly on the time slots where the PUCCH is overlapped with the PUSCH in time domain, and the PUCCH is transmitted, so that the PUCCH encoding manners on multiple time slots are ensured to be same, the PUCCHs on multiple time slots can be combined, and the reception performance of the PUCCH can be ensured.

The UCI types carried on PUSCH include Hybrid Automatic Repeat reQuest (HARQ)-response (ACK) and Channel State Information (CSI). The mapping order of HARQ-ACK and CSI is: HARQ-ACK, and CSI. Each type of UCI is encoded independently, and proportion of the number of Resource Elements (REs) occupied by the UCIs in all the REs resources in the PUSCH is determined through the ratio of the total load size of these UCIs (including the load size of the Cyclic Redundancy Check (CRC)) to the total load size of the uplink data. At the same time, considering that the transmission reliability requirement of the UCIs is higher than the data transmission reliability requirement, different code rate compensation factors $\beta_{offset}$ are introduced for different UCIs in calculating this proportion. Furthermore, in order to ensure the transmission of the uplink data, the UCI does not occupy all the RE resources, the higher layer signaling configuration parameter $\alpha$ is introduced to limit the upper limit of the number of REs occupied by each type of UCI information.

The number of REs occupied by the HARQ-ACK is calculated through formula (1):

$$Q'_{\text{ACK}} = \min\left\{ \left\lceil \frac{\left(O_{\text{ACK}} + L_{\text{ACK}}\right) \cdot \beta_{\text{offset}}^{\text{PUSCH}} \cdot \sum_{l=0}^{N_{\text{symb,all}}^{\text{PUSCH}}-1} M_{\text{sc}}^{\text{UCI}}(l)}{\sum_{r=0}^{C_{\text{UL-SCH}}-1} K_r} \right\rceil, \left\lceil \alpha \cdot \sum_{l=l_0}^{N_{\text{symb,all}}^{\text{PUSCH}}-1} M_{\text{sc}}^{\text{UCI}}(l) \right\rceil \right\}$$

formula (1).

Where $O_{\text{ACK}}$ is the number of HARQ-ACK bits, $L_{\text{ACK}}$ is the number of CRC bits, $\beta_{\text{offset}}^{\text{PUSCH}}$ is the code rate compensation factor of HARQ-ACK, $M_{\text{sc}}^{\text{UCI}}(l)$ is the number of sub-carriers available for carrying UCIs on symbol l, $\sum_{l=0}^{N_{\text{symb,all}}^{\text{PUSCH}}-1} M_{\text{sc}}^{\text{UCI}}(l)$ represents the number of REs available for carrying UCIs on the PUSCH, and the denominator $\sum_{r=0}^{C_{\text{UL-SCH}}-1} K_r$ represents the payload size of the uplink data.

The number of REs occupied by the CSI part I is calculated through the formula (2):

$$Q'_{\text{CSI-1}} = \min\left\{ \left\lceil \frac{\left(O_{\text{CSI-1}} + L_{\text{CSI-1}}\right) \cdot \beta_{\text{offset}}^{\text{PUSCH}} \cdot \sum_{l=0}^{N_{\text{symb,all}}^{\text{PUSCH}}-1} M_{\text{sc}}^{\text{UCI}}(l)}{\sum_{r=0}^{C_{\text{UL-SCH}}-1} K_r} \right\rceil, \left\lceil \alpha \cdot \sum_{l=0}^{N_{\text{symb,all}}^{\text{PUSCH}}-1} M_{\text{sc}}^{\text{UCI}}(l) \right\rceil - Q'_{\text{ACK}} \right\}$$

formula (2).

Where $O_{\text{CSI-1}}$ is the bit number of CSI part I.

The number of REs occupied by the CSI part II is calculated through the formula (3):

$$Q'_{\text{CSI-2}} = \min\left\{ \left\lceil \frac{\left(O_{\text{CSI-2}} + L_{\text{CSI-2}}\right) \cdot \beta_{\text{offset}}^{\text{PUSCH}} \cdot \sum_{l=0}^{N_{\text{symb,all}}^{\text{PUSCH}}-1} M_{\text{sc}}^{\text{UCI}}(l)}{\sum_{r=0}^{C_{\text{UL-SCH}}-1} K_r} \right\rceil, \left\lceil \alpha \cdot \sum_{l=0}^{N_{\text{symb,all}}^{\text{PUSCH}}-1} M_{\text{sc}}^{\text{UCI}}(l) \right\rceil - Q'_{\text{ACK}} - Q'_{\text{CSI-1}} \right\}$$

formula (3).

Where $O_{\text{CSI-2}}$ is the bit number of CSI part II.

In 5G, a URLLC service is introduced. The feature of the URLLC service is that the ultra-high reliability (e.g.,

99.999%) transmission can be implemented within an extreme delay (e.g., 1 ms).

In the above method, if the timing requirement is met, the UCIs in the PUCCH are multiplexed into the PUSCH to implement transmission of two types of information (UCI and data). If the timing requirement is not met, the UCI in the PUCCH is preferentially transmitted. When a PUSCH carries URLLC data, the transmission of the PUSCH is stopped, resulting in additional delay, which may cause that the traffic delay requirement cannot be met.

Moreover, in some scheduling timing cases, as illustrated in FIG. 2, the downlink grant (DL grant) is after the uplink grant (UL grant), which cannot be supported by the existing standard, thus the DL grant and UL grant are ignored and the PUCCH and PUSCH will not be transmitted. Therefore, this scheduling constraint may cause additional delay.

Based on the above problems, an embodiment of the present disclosure provides a method for transmitting the uplink information. The method for transmitting the uplink information of the embodiment of the present disclosure can be applied to various communication systems, such as a Long Term Evolution (LTE) system, an LTE Frequency Division Duplex (FDD) system, an LTE Time Division Duplex (TDD) system, a Universal Mobile Telecommunications System (UMTS) communication system, a 5G system, or a future communication system.

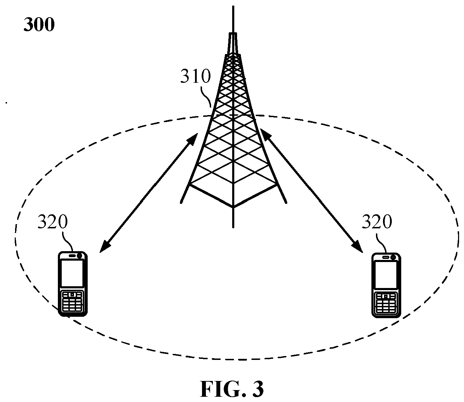

Exemplarily, the embodiment of the present disclosure is applied to the communication system 300 as illustrated in FIG. 3. The communication system 300 may include a network device 310. The network device 310 may be a device that communicates with a terminal device 320 (or referred to as a communication terminal, or a terminal). The network device 310 may provide communication coverage for a specific geographic area and may communicate with a terminal device within the coverage. Alternatively, the network device 310 may be an Evolutional Node B (eNB or eNodeB) in an LTE system, a base station (gNB) in an NR/5G system, or a wireless controller in a Cloud Radio Access Network (CRAN). Or the network device may be a mobile switching center, a relay station, an access point, a vehicle-mounted device, a wearable device, a hub, a switch, a bridge, a router, a network-side device in a 5G network, a network device in a future evolutionary Public Land Mobile Network (PLMN), or the like.

The communication system 300 further includes at least one terminal device 320 within the coverage of the network device 310. As used herein, the "terminal device" includes, but is not limited to, being connected via a wireline, for example, being connected via a Public Switched Telephone Networks (PSTN), a Digital Subscriber Line (DSL), a digital cable, and a direct cable; and/or another data connection/network; and/or being connected via a wireless interface, for example, being connected via a cellular network, a Wireless Local Area Network (WLAN), a digital TV network such as a DVB-H network, a satellite network, an Amplitude Modulation-Frequency Modulation (AM-FM) broadcast transmitter; and/or an equipment of another terminal device, herein the equipment is configured to receive/transmit a communication signal; and/or an Internet of Things (IoT) device. The terminal device configured to communicate through a wireless interface may be referred to as a "wireless communication terminal", a "wireless terminal" or a "mobile terminal". Examples of the mobile terminal include, but are not limited to, a satellite phone or a cellular phone; a Personal Communications System (PCS) terminal that may combine the cellular radio phone with data processing, fax, and data communication; a Personal Digital Assistant (PDA) that may include radio telephone, pager, Internet/intranet access, Web browser, memo pad, calendar, and/or Global Positioning System (GPS) receiver; and a conventional laptop and/or a palmtop receiver or other electronic devices including radio telephone transceiver. The terminal device may refer to an access terminal, a UE, a user unit, a user station, a mobile station, a mobile platform, a remote station, a remote terminal, a mobile device, a user terminal, a terminal, a wireless communication device, a user agent or a user device. The access terminal may be a cell phone, a cordless phone, a Session Initiation Protocol (SIP) phone, a Wireless Local Loop (WLL) station, a PDA, a handheld device with a wireless communication function, a computing device, another processing device connected to a wireless modem, a vehicle-mounted device, a wearable device, a terminal device in 5G network, a terminal device in the future evolutionary PLMN or the like.

Alternatively, Device to Device (D2D) communication may be performed between the terminal devices 320.

Alternatively, a 5G system or 5G network may also be referred to as an NR system or an NR network.

FIG. 3 exemplarily illustrates a network device and two terminal devices. Alternatively, the communication system 300 may include multiple network devices, and another number of terminal devices may be included within the coverage of each network device. There are no limits made thereto in the embodiments of the disclosure.

Alternatively, the communication system 300 may further include other network entities such as a network controller and a mobility management entity. There are no limits made thereto in the embodiments of the disclosure.

It is to be understood that the device with a communication function in the network/system in the embodiments of the disclosure may be referred to as a communication device. Taking the communication system 300 illustrated in FIG. 3 as an example, the communication device may include a network device 310 and a terminal device 320 which are with communication functions. The network device 310 and the terminal device 320 may be the specific devices described above and are not further elaborated herein. The communication device may also include other devices in the communication system 300, for example, may also include other network entities such as a network controller, and a mobility management entity, which are not limited in the embodiments of the disclosure.

In an embodiment of the present disclosure, the network device 310 or the terminal device 320 in the communication system 300 may be referred to as an information transmission device.

The method for transmitting the uplink information provided in the embodiment of the present disclosure includes: determining whether a time domain resource of a PUCCH and a time domain resource of a PUSCH overlap in a time domain, and responsive to that there is an overlap, determining a transmission manner for the PUCCH and/or the PUSCH according to a priority parameter. The priority parameter includes: an information priority of the PUCCH; or the information priority of the PUCCH and the information priority of the PUSCH.

In the embodiment of the present disclosure, when the time domain resource of the PUCCH and the time domain resource of the PUSCH overlap in the time domain, only the information on the PUCCH or only the information on the PUSCH is transmitted, or part or all of the information on the PUCCH is multiplexed to the PUSCH for transmission. The information on the PUCCH includes UCI, and the information on the PUSCH includes UCI and data.

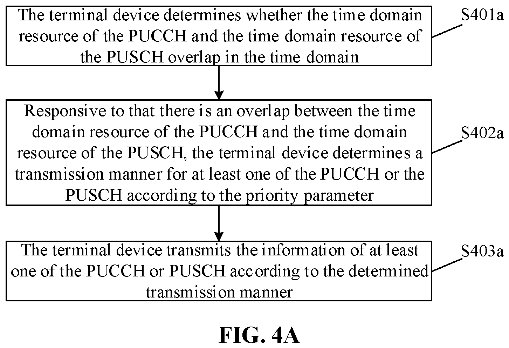

The method for transmitting the uplink information provided by the embodiment of the present disclosure may be performed by a terminal device or a network device. Taking that the method for transmitting the uplink information provided in the embodiment of the present disclosure is performed by the terminal device as an example, as illustrated in FIG. 4A, the method includes operations S401a to S403a.

At S401a, the terminal device determines whether the time domain resource of the PUCCH and the time domain resource of the PUSCH overlap in the time domain.

At S402a, responsive to that there is an overlap, the terminal device determines a transmission manner for at least one of the PUCCH or the PUSCH according to the priority parameter.

At S403a, the terminal device transmits the information of at least one of the PUCCH or PUSCH according to the determined transmission manner.

Alternatively, the terminal device receives the DL grant sent by the network device, schedules the PDSCH according to the received DL grant, and determines the HARQ-ACK feedback resource (i.e, the resource of the PUCCH) for the scheduled PDSCH according to the received DL grant. Herein, the determined PUCCH resource includes a time domain resource and a frequency domain resource. The terminal device receives the UL grant sent by the network device, and determines the PUSCH resource according to the received UL grant. The determined PUSCH resource includes the time domain resource and frequency domain resource.

Alternatively, the terminal device receives the semi-static signaling and the corresponding Downlink Control Information (DCI) trigger signaling sent by the network device, and determines the PUSCH resource according to the semi-static signaling and the corresponding DCI trigger signaling. The PUSCH resource includes a frequency domain resource and a time domain resource. Alternatively, the semi-static signaling includes a configured grant configuration (ConfiguredGrantConfig) and a semi-static scheduling configuration (SPS-Config). Alternatively, the DCI trigger signaling includes the DCI of which the CRC is scrambled by a Configured Scheduling RNTI (CS-RNTI). The terminal receives a semi-static signaling (e.g., SchedulingRequestResourceConfig, or CSI-ReportConfig) sent by the network side, to determine a PUCCH resource carrying a Scheduling Request (SR) or CSI.

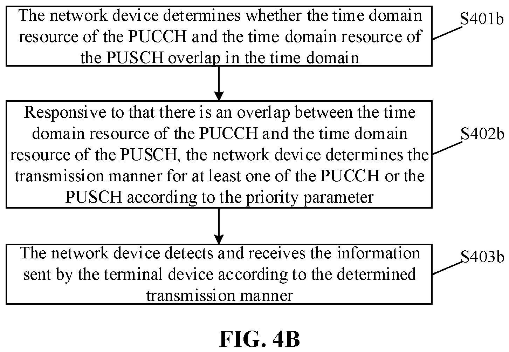

Alternatively, taking that the method for transmitting the uplink information provided in the embodiment of the present disclosure is implemented by the network device as an example, as illustrated in FIG. 4B, the method includes the operations S401b to S403b.

At S401b, the network device determines whether the time domain resource of the PUCCH and the time domain resource of the PUSCH overlap in the time domain.

At S402b, responsive to that there is an overlap, the network device determines the transmission manner for at least one of the PUCCH or the PUSCH according to the priority parameter.

At step S403b, the network device detects and receives the information transmitted by the terminal device according to the determined transmission manner.

In an example, the network device determines the PUCCH resource and the PUSCH resource according to the information carried in the message sent from the terminal device, and the message used to determine the PUCCH resource and the PUSCH resource is the same as the message used by the terminal device to determine the PUCCH resource and the PUSCH resource. Details are not elaborated herein.

In an embodiment of the present disclosure, the priority parameter includes one of the following two cases:

case 1: the information priority of the PUCCH;

case 2: the information priority of the PUCCH and the information priority of the PUSCH.

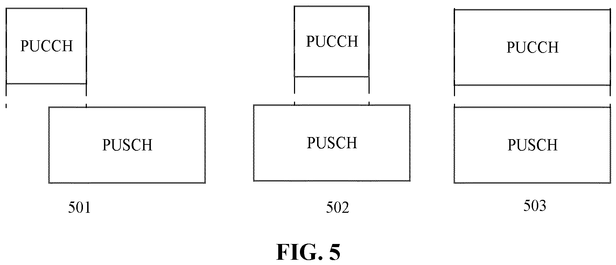

As illustrated in FIG. 5, the manner that the time domain resource of the PUCCH and the time domain resource of the PUSCH overlap in the time domain includes: partially overlapped as illustrated in 501, inclusion as illustrated in 502, and completely overlapped as illustrated in 503.

When the time domain resource of the PUCCH and the time domain resource of the PUSCH overlap in the time domain, the attribute parameter of the PUCCH and the attribute parameter of the PUSCH are determined, and the information priority of the PUCCH and the information priority of the PUSCH are determined according to the attribute parameter of the PUCCH and the attribute parameter of the PUSCH, respectively.

In the embodiment of the present disclosure, the information priority is determined according to at least one of the following attribute parameters: a service type, a service reliability requirement, or a transmission delay requirement. The service type may include: enhanced mobile broadband (eMBB), mass machine type communication (mMTC), uRLLC, and the like. The reliability requirement of the service may be represented by different reliability identifiers. For example, the reliability requirement includes: first-level reliability, second-level reliability, and third-level reliability, which are sequentially sorted from high to low according to the reliability as: the first-level reliability, the second-level reliability, and the third-level reliability. The transmission delay requirement of the service may be represented by different delay identifiers. For example, the transmission delay requirement includes: a first-level delay, a second-level delay, and a third-level delay, which are sequentially sorted from high to low according to the delay requirement as: the first-level delay, the second-level delay, and the third-level delay.

Alternatively, when the attribute parameter includes one type of attribute parameter, the information priority of the PUCCH or the information priority PUSCH may be determined according to the level of the current attribute parameter. Alternatively, when the attribute parameter includes multiple types of attribute parameters, the information priority of the PUCCH or the information priority of the PUSCH may be determined according to multiple attribute parameters. In an example, when the attribute parameters include multiple types of attribute parameters, the levels corresponding to different attribute parameters are determined, and multiple levels quantization results are weighted and summed to obtain the information priority of the PUCCH or the information priority of the PUSCH. In another example, when the attribute parameter includes multiple types of attribute parameters, the level corresponding to each attribute parameter is determined, and the highest level is determined as the information priority of the corresponding channel.

In the embodiment of the present disclosure, the information priority of the PUCCH or the information priority of the PUSCH is indicated through any one of the following manners: being explicitly indicated by the DCI; being implicitly indicated by the DCI; being implicitly indicated by an attribute of a channel; or being predetermined by a terminal device and a network device. Alternatively, the attribute of the channel may include parameter such as the number of symbols of the channel, the period, or the like.

In the embodiment of the present disclosure, the network device or the terminal device may directly determine the transmission manner for the PUCCH and the PUSCH according to the information priority of the PUCCH and the information priority of the PUSCH, or may determine the transmission manner for the PUCCH and the PUSCH according to the relationship between the PUCCH and PUSCH and the multiplexing transmission condition.

Alternatively, the operation that the transmission manner for at least one of the PUCCH or the PUSCH is determined according to the information priority of the PUCCH and the information priority of the PUSCH, the method includes: when the PUCCH and the PUSCH do not satisfy the multiplexing transmission condition, determining to transmit one of the PUCCH and the PUSCH according to the information priority of the PUCCH and the information priority of the PUSCH.

Alternatively, when the PUCCH and the PUSCH do not satisfy the multiplexing transmission condition, the PUCCH is not multiplexed into the PUSCH, and only the PUCCH or only the PUSCH is transmitted according to the priority information of the PUCCH and the priority information of the PUSCH. Alternatively, when the PUCCH and the PUSCH satisfy the multiplexing transmission condition, part or all of the UCIs on the PUCCH are multiplexed into the PUSCH, and the UCI sorting of the UCIs of the PUCCH multiplexed into the PUSCH is determined according to the priority information of the PUCCH.

For example, a first timing and a second timing corresponding to the earliest uplink channel of the PUCCH and the PUSCH are determined. The first timing (e.g., T1 illustrated in FIG. 1) is the time difference between the first OFDM symbol of the earliest transmitted channel of the PUCCH and the PUSCH overlapped in the time domain and the last OFDM symbol of the PDSCH scheduled by the DCI scheduling the HARQ-ACK. The second timing (T2 illustrated in FIG. 1) is the time difference between the first OFDM symbol of the earliest transmitted channel of the PUSCH and PUCCH overlapped in time domain and the last OFDM symbol of the latest DCI (DCI scheduling the PUSCH or DCI scheduling the PUCCH). When the first timing and the second timing corresponding to the earliest uplink channel of the PUCCH and the PUSCH satisfy the multiplexing transmission condition, it is determined that the PUCCH and the PUSCH satisfy the multiplexing transmission condition. Otherwise it is determined that the PUCCH and the PUSCH do not satisfy the multiplexing transmission condition.

The multiplexing transmission condition includes a first timing requirement corresponding to the first timing and a second timing requirement corresponding to the second timing. Alternatively, the first timing requirement is: greater than N1+1 OFDM symbols. N1 is the time for the UE to process the PDSCH as reported by the UE. Alternatively, the second timing requirement is: greater than N2+1 OFDM symbols. N2 is the time for the UE to prepare the PUSCH as reported by the UE.

When the first timing does not satisfy the first timing requirement, or the second timing does not satisfy the second timing requirement, it is determined that the first timing and the second timing do not satisfy the multiplexing transmission condition.

When the first timing satisfies the first timing requirement and the second timing satisfies the second timing requirement, it is determined that the first timing and the second timing satisfy the multiplexing transmission condition.

In the embodiment of the present disclosure, the rule content of the multiplexing transmission condition is not limited.

In an embodiment of the present disclosure, the operation of determining to transmit one of the PUCCH and the PUSCH according to the information priority includes at least one of the following manners.

First manner: When the information priority of the PUCCH is different from the information priority of the PUSCH, the one with a higher priority between the PUCCH and the PUSCH is transmitted.

Second manner: When the information priority of the PUCCH is the same as the information priority of the PUSCH, the channel level of the PUCCH and the channel level of the PUSCH are determined, and the one with a higher channel level between the PUCCH and the PUSCH is transmitted.

In the first manner, when the information priorities of the PUCCH and PUSCH are different, the information priorities are used as the basis for selecting the transmitted channel.

In an example, the PUCCH is transmitted when the information priorities of the PUCCH and the PUSCH are different and the information priority of the PUCCH is higher than the information priority of the PUSCH. In another example, the PUSCH is transmitted when the information priorities of the PUCCH and the PUSCH are different and the information priority of the PUCCH is lower than the information priority of the PUSCH.

In the second manner, when the information priorities of the PUCCH and PUSCH are the same, the channel level is used as a basis for selecting the transmitted channel.

In an example, the PUCCH and the PUSCH have the same information priority, and the PUCCH has a higher channel level than the PUSCH, then the PUCCH is transmitted. In another example, the PUCCH and the PUSCH have the same information priority, and the PUSCH has a lower channel level than the PUSCH, then the PUSCH is transmitted.

In the embodiment of the present disclosure, when the transmission manner for transmitting the PUCCH and the PUSCH is determined according to the information priority, only the first manner may be used for the determination, only the second manner may be used for the determination, or both the first manner and the second manner may be used for the determination.

In an embodiment of the present disclosure, the operation of determining the transmission manner for at least one of the PUCCH or the PUSCH according to the information priority further includes at least one of:

stopping transmitting the one with a lower information priority between the PUCCH and the PUSCH;

stopping transmitting the one with a lower channel level between the PUCCH and the PUSCH.

Alternatively, when a channel having a higher information priority is determined to be transmitted by using the first manner, the transmission of the channel having a lower information priority is stopped. In an example, when the information priorities of the PUCCH and the PUSCH are different and the information priority of the PUCCH is higher than the information priority of the PUSCH, the PUCCH is transmitted, and the transmission of the PUSCH is stopped. In another example, when the information priorities of the PUCCH and the PUSCH are different and the information priority of the PUCCH is lower than the information priority of the PUSCH, the PUSCH is transmitted, and the transmission of the PUCCH is stopped.

Alternatively, when a channel having a higher channel level is determined to be transmitted by using the second manner, the transmission of the channel having a lower transmission channel class is stopped.

In an example, the PUCCH has the same information priority as the PUSCH, and the PUCCH has a higher channel level than the PUSCH, then the PUCCH is transmitted and the transmission of PUSCH is stopped. In another example, the PUCCH has the same information priority as the PUSCH, and the PUCCH has a lower channel level than the PUSCH, then the PUSCH is transmitted and the transmission of PUCCH is stopped.

In the embodiment of the present disclosure, in the PUCCH and the PUSCH, a transmitted channel is referred to as a first channel, and a channel where the transmission is stopped is referred to as a second channel. For example, when the PUCCH is transmitted, the transmission of PUSCH is stopped, the first channel is the PUCCH, and the second channel is the PUSCH. For another example, when the PUSCH is transmitted, the transmission of PUCCH is stopped, the first channel is the PUSCH, and the second channel is the PUCCH.

In an embodiment of the present disclosure, when the transmission manner is to transmit a first channel of the PUCCH and the PUSCH and stop transmitting a second channel of the PUCCH and the PUSCH, the manner of stopping transmitting the second channel includes at least one of: stopping transmitting the entire second channel; stopping transmitting a portion of the second channel corresponding to a time period during which the second channel overlaps with the first channel in time domain; or stopping transmitting the portion of the second channel after the start position at which the second channel overlaps with the first channel in the time domain.

In the embodiment of the present disclosure, the transmission of the second channel may be stopped by using one or more of the above three stopping manners. The stopping manner for stopping transmitting the second channel includes: being predetermined by the terminal device and the network device; being configured by the network device; or being determined according to a chronological order between a time point at which the terminal device is capable of determining a conflict and a time point for transmitting the second channel. Herein, the conflict is that the PUCCH and the PSUCH conflict in the time domain, i.e., the overlapping.

Alternatively, when the manner for stopping transmitting the second channel is configured by the network device, the network device may transmit the configured manner to the terminal device through a set parameter, so that the terminal device acquires the manner configured by the network device.

Alternatively, when the manner for stopping transmission of the second channel is determined according to the chronological order of a time point at which the terminal device can determine a conflict and a time point for transmitting the PUSCH, the terminal device may notify the network device of the determined manner through a set parameter, so that the network device acquires the manner determined by the terminal device.

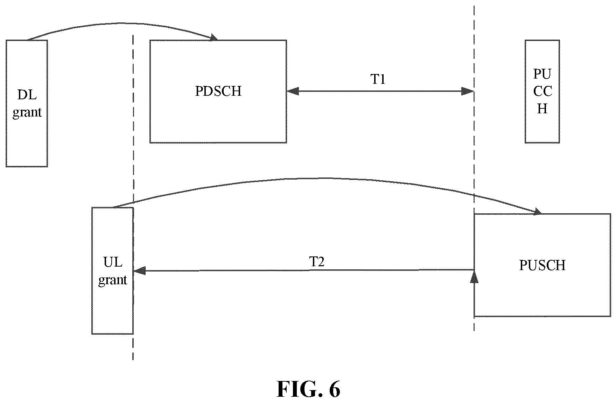

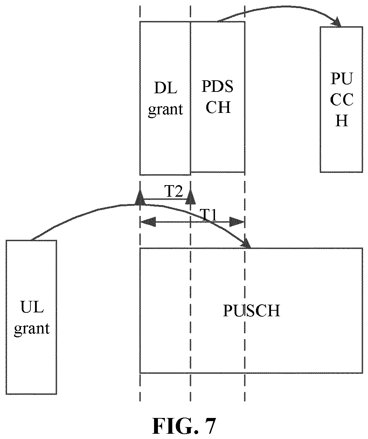

The first channel is a PUCCH and the second channel is a PUSCH, which is taken as an example of the manner for stopping transmitting the second channel. In an example, when the stopping manner predetermined by the terminal device and the network device is to stop transmitting the portion of the PUSCH corresponding to the time period during which the PUSCH overlaps with the PUCCH in the time domain, the portion of the PUSCH corresponding to the time period during which the PUSCH overlaps with the PUCCH in the time domain is stopped transmitting when the PUSCH is stopped. In another example, when the stopping manner configured by the network device is to stop transmitting the portion of the PUSCH after the start position at which the PUSCH overlaps with the PUCCH in the time domain, the portion of the PUSCH after the start position at which the PUSCH overlaps with the PUCCH in the time domain is stopped transmitting when the PUSCH is stopped. In another example, when the stopping manner is determined according to the chronological order between the time point that the terminal device can determine a conflict and the time point for transmitting the PUSCH, the transmission of entire PUSCH is stopped when the time point that the terminal device can determine the conflict is before the time point for transmitting the PUSCH. Otherwise, the transmission of PUSCH is partially stopped. For example, as illustrated in FIG. 6, before the PUSCH is transmitted, since the terminal may anticipate the position of the PUCCH (the PUCCH overlaps with the PUSCH in the time domain) according to the DL grant, when the terminal makes the decision to stop the PUSCH, the terminal stops transmitting the entire PUSCH. As illustrated in FIG. 7, the terminal does not receive the DL Grant until after the PUSCH transmission has started, and then finds that the PUCCH and the PUSCH overlap in the time domain based on the received DL grant, then part of the PUSCH is stopped transmitting.

In the embodiment of the present disclosure, the operation of determining the transmission manner for at least one of the PUCCH or the PUSCH according to the information priority of the PUCCH includes: determining the UCI sorting according to the information priority of the PUCCH; and multiplexing the UCIs in the PUCCH into the PUSCH according to the UCI sorting.

In an embodiment of the present disclosure, all or part of the UCIs in the PUCCH may be multiplexed into the PUSCH.

Alternatively, when the PUCCH and the PUSCH satisfy the multiplexing transmission condition, the UCIs in the PUCCH are multiplexed into the PUSCH according to the UCI sorting.

When the UCIs in the PUCCH are multiplexed into the PUSCH, the UCIs are multiplexed into the PUSCH based on the UCI sorting which is determined according to the priority information of the PUCCH. Herein, the UCI may include SR, HARQ-ACK/NACK, and CSI. The CSI includes a Channel Quality Indicator (CQI), a Precoding Matrix Indicator (PMI), and a Rank Indication (RI).

In an embodiment of the present disclosure, the sorting rule of the UCI sorting is determined through one of the following manners: being predetermined by a terminal device and a network device; or being determined according to the sorting configuration of the network device.

Herein, the sorting rule followed by the terminal device or the network device to sort the UCIs may be predetermined by the terminal device and the network device, or may be indicated by the network device based on the sorting configuration.

When the UCI sorting is implemented at the terminal device and the sorting rule is indicated by the terminal device based on the sorting configuration, the network device sends the sorting configuration to the terminal device, and the terminal device sorts the UCIs in the PUCCH based on the received sorting configuration.

Alternatively, the sorting rule of the UCI sorting is determined according to the information priority corresponding to the UCI. Herein, multiple UCIs are sorted according to the information priority of each of multiple UCIs. When the number of resources occupied by the UCIs in the PUCCH exceeds the maximum resources used for multiplexing the UCIs in the PUSCH, the UCIs that are sorted later and exceed the maximum resources are discarded, thereby avoiding discarding the UCIs with the high information priority level.

For example, the UCIs in the PUCCH include UCI1, UCI2, and UCI3. The sorted UCIs obtained according to the information priority are: UCI1, UCI2, and UCI3, and the number of resources occupied by UCI1, UCI2, and UCI3 are 2, 2, and 3, respectively. When the maximum resource for multiplexing the UCIs in the PUSCH is four, UCI1 and UCI2 are multiplexed into the PUSCH, and the UCI3 which is sorted later is discarded. When the maximum resource used to multiplex UCIs in a PUSCH is eight, UCI1, UCI2, and UCI3 are multiplexed into the PUSCH with the UCI sorting, i.e., UCI1, UCI2, and UCI3.

In the embodiment of the present disclosure, the UCIs in the PUCCH are multiplexed into the PUSCH to reduce the resources used by the PUSCH, thereby reducing the transmission reliability of the PUSCH. However, the UCIs in the PUCCH are multiplexed into the PUSCH in a certain UCI order based on the information priority of the UCI, so that the resource allocation between the PUCCH and the PUSCH can be balanced, thereby ensuring the reliability requirements of the two channels.

In an embodiment of the present disclosure, the sorting rule of the UCI sorting includes one of the following:

rule 1: sorting firstly according to the information priority, and then sorting according to the UCI type for the same information priority;

rule 2: sorting firstly according to the UCI type, and then sorting according to the information priority for the same UCI type.

In embodiments of the present disclosure, part or all of the UCI types are distinguished with the information priority. For example, SR, HARQ-ACK/NACK, and CSI are distinguished with information priorities. For another example, SR and HARQ-ACK/NACK are distinguished with the information priority, and CSI does not be distinguished with the information priority.

Alternatively, sorting according to the information priority includes: sorting the UCI with a high information priority in front; or sorting the UCI with a low information priority in front.

In the following, the operation of sorting the UCIs according to the service type with the information priority will be described as an example.

In an example, the services corresponding to the UCIs include the URLLC and the eMBB, and the information priority of the URLLC is higher than the information priority of the eMBB. All the UCI types of the URLLC are before all the UCI types of the eMBB, the UCIs with a service type include the HARQ-ACK and the CSI, and the order of the UCIs may be URLLC HARQ-ACK>URLLC CSI>eMBB HARQ-ACK >eMBB CSI.

In an example, the services corresponding to the UCIs include the URLLC and the eMBB, the information priority of the URLLC is higher than the information priority of the eMBB, the UCI types include the HARQ-ACK, and the CSI are not classified into the service types, then the UCIs may be sorted as: URLLC HARQ-ACK>eMBB HARQ-ACK>CSI.

In an example, the services corresponding to the UCIs include the URLLC and the eMBB, and the information priority of the URLLC is higher than the information priority of the eMBB. The sorting rule of the UCI sorting may be that: the SR and HARQ-ACK of the URLLC have a higher priority than the SR and HARQ-ACK of the eMBB, and the CSI. In this case, when the eMBB SR is not transmitted, the UCI sorting is: URLLC SR>URLLC HARQ-ACK>eMBB HARQ-ACK>CSI. When the eMBB SR is transmitted, the UCI sorting is: URLLC SR> URLLC HARQ-ACK>eMBB HARQ-ACK>eMBB SR>CSI. Herein, the CSI does not be distinguished with service type.

In an example, the services corresponding to the UCIs include URLLC and eMBB. The specified service type is eMBB and the specified UCI is HARQ-ACK, then the UCI sorting may be: eMBB HARQ-ACK>URLLC HARQ-ACK>CSI.

In the embodiment of the present disclosure, the multiplexing of the UCIs in the PUCCH into the PUSCH will reduce the resources used by the PUSCH, which will reduce the reliability of the PUSCH transmission. Therefore, when the UCI is multiplexed into the PUSCH, it needs to balance the resource allocation between the PUCCH and the PUSCH, thereby ensuring the reliability requirements of the two channels.

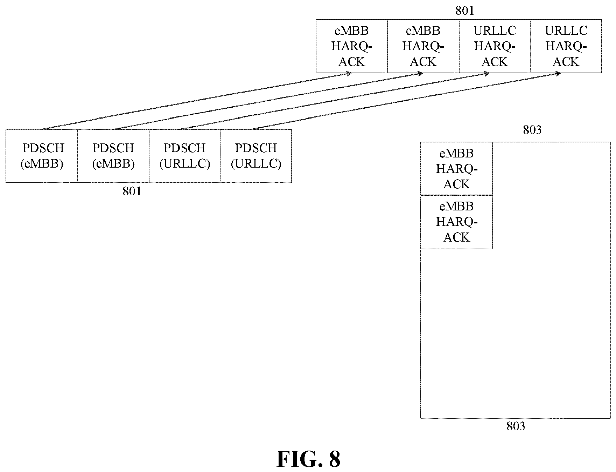

If the reliability of the PUSCH data transmission is preferentially guaranteed, the resources for transmitting the UCIs are very limited. According to the existing sorting rule of the UCIs, i.e., mapping different UCIs to the PUSCHs according to the chronological order, the HARQ-ACK sorting rule cause that the HARQ-ACK information cannot be completely multiplexed into the PUSCH. That is, a part of the HARQ-ACK is lost. For example, as illustrated in FIG. 8, the URLLC HARQ-ACK, the eMBB HARQ-ACK and the PUSCH illustrated as 801 overlap in the time domain. According to the existing sorting rule of the UCIs, the URLLC HARQ-ACK and the eMBB HARQ-ACK may be obtained as the sorting 802 according to the time order of the corresponding data channel PDSCH 801. According to the existing sorting rule, the URLLC HARQ-ACK may be sorted later, and the URLLC HARQ-ACK information may not be completely multiplexed in the PUSCH. The multiplexing result on the PUSCH is illustrated as 803, the URLLC HARQ-ACK is lost, which will affect the transmission reliability of high-priority services.

Therefore, it is difficult to balance the reliable transmission between the UCIs and the PUSCH by sorting the UCIs based on the chronological order, especially for the URLLC service, which requires high reliability.

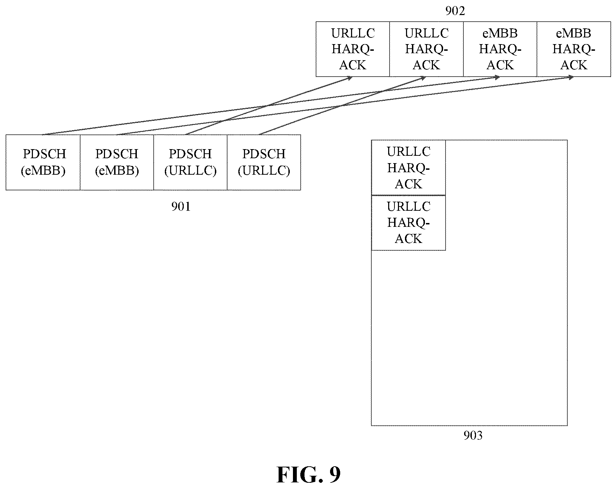

When the UCIs are sorted according to the information priority provided in the embodiment of the present disclosure, if the URLLC HARQ-ACK is preferably guaranteed to be transmitted, a large UCI resources needs to be reserved. The UCIs illustrated as 901 in FIG. 9 are the same as those illustrated as 801 in FIG. 8. The sorting result according to the information priority is illustrated as 902 in FIG. 9, and the multiplexing result on the PUSCH is illustrated as 903 in FIG. 9, so as to ensure the transmission of the UCIs corresponding to the high-priority service. Herein, it is to be understood that the code rate of the UCI in FIG. 8 and the code rate of the UCI in FIG. 9 are the same.

In the embodiment of the present disclosure, when the transmission manner is to multiplex the UCIs in the PUCCH into the PUSCH, the number of resource elements occupied by the UCIs is obtained according to the code rate compensation factor, and the code rate compensation factor is associated with the service type of the service corresponding to the UCIs.

Herein, the number of resource elements occupied by each UCI is associated with the service for the UCI. Herein, a bit rate compensation factor can be defined as $\beta_{\text{Stype, offset}}$, where Stype is the service type. For example, $\beta_{\text{URLLC, offset}}$ is the code rate compensation factor of the service type URLLC, and for another example, $\beta_{\text{eMBB, offset}}$ is the code rate compensation factor of the service type eMBB.

The code rate compensation factors corresponding to UCIs with different services types are independent; or the code rate compensation factors corresponding to different types of UCIs with same service type are shared or independent.

When the code rate compensation factors corresponding to UCIs with different service types are independent, there is no relationship between the code rate compensation factors corresponding to the different service types. For example, the code rate compensation factor corresponding to URLLC HARQ-ACK is independent from the code rate compensation factor corresponding to eMBB HARQ-ACK.

When the code rate compensation factors corresponding to different types of UCIs with the same service type are shared or independent, for the same service type, the code rate compensation factors corresponding to different types of UCIs may be same or different. For example, for SR, the resource calculation manner is similar to HARQ-ACK, but the code rate compensation factor may be independently set or used with HARQ-ACK.

In an example, the resource elements occupied by URLLC HARQ-ACK may be calculated according to the formula (4):

$$Q'_{\text{ACK}} = \min \left\{ \left\lceil \frac{\left( O_{\text{URLLC,ACK}} + L_{\text{URLLC,ACK}} \right) \cdot \beta_{\text{URLLC,offset}}^{\text{PUSCH}} \cdot \sum_{l=0}^{N_{\text{symb,all}}^{\text{PUSCH}}-1} M_{\text{sc}}^{\text{UCI}}(l)}{\sum_{r=0}^{C_{\text{UL-SCH}}-1} K_r} \right\rceil, \left\lceil \alpha \cdot \sum_{l=l_0}^{N_{\text{symb,all}}^{\text{PUSCH}}-1} M_{\text{sc}}^{\text{UCI}}(l) \right\rceil \right\}$$

formula (4).

The resource elements occupied by eMBB HARQ-ACK can be calculated according to the formula (5):

$$Q'_{\text{ACK}} = \min \left\{ \left\lceil \frac{\left( O_{\text{eMBB,ACK}} + L_{\text{eMBB,ACK}} \right) \cdot \beta_{\text{eMBB,offset}}^{\text{PUSCH}} \cdot \sum_{l=0}^{N_{\text{symb,all}}^{\text{PUSCH}}-1} M_{\text{sc}}^{\text{UCI}}(l)}{\sum_{r=0}^{C_{\text{UL-SCH}}-1} K_r} \right\rceil, \left\lceil \alpha \cdot \sum_{l=l_0}^{N_{\text{symb,all}}^{\text{PUSCH}}-1} M_{\text{sc}}^{\text{UCI}}(l) \right\rceil \right\}$$

formula (5).

For CSI, if it needs to distinguish the service types, code rate compensation factors corresponding to different service types may be set to be different.

For SR, the resource calculation is similar to HARQ-ACK, but the β_offset may be set independently or used with the HARQ-ACK. Further, the SR may not be distinguished with services, that is, service factors are not included in the resource calculation.

In the claimed embodiment of the present disclosure, for different types of UCI, the code rate compensation factors of some UCIs are associated with the service types, and the code rate compensation factors of some UCIs are independent of the service type and do not be distinguished with the service type. For example, for SR, the resource calculation is similar to HARQ-ACK, but the code rate compensation factors may be set independently or shared with HARQ-ACK. Further, the SR may not be distinguished with service.

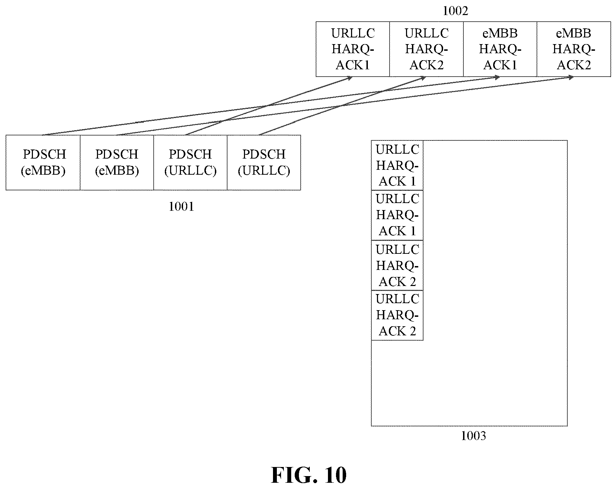

In an example, as illustrated in FIG. 10, the UCIs illustrated in 1001 of FIG. 10 are the same as 801 of FIG. 8. The sorting result according to the information priority is illustrated in 1002, which is the same as in 902 of FIG. 9. The UCIs are encoded according to different code rate compensation factors, and the multiplexing result on the PUSCH is illustrated in 1003 of FIG. 10. Low code rate is used for the UCIs corresponding to the information priorities and multiple REs are occupied, thereby ensuring the transmission of the UCIs corresponding to the high-priority services and the transmission reliability of the transmission of the high-priority services.

In the related art, if UCIs with different service types correspond to the same code rate compensation factor, the number of occupied resource elements is the same. In the embodiment of the present disclosure, UCIs with different service types may adopt different code rate compensation factors, so that the code rates of UCIs with different service types can be flexibly set, and high transmission reliability of UCIs of high priority level can be ensured according to actual requirements.

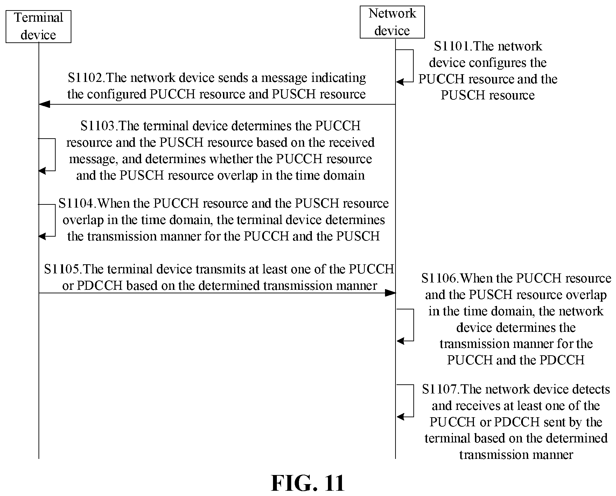

In the embodiment of the present disclosure, the interaction process for the terminal device and the network device is illustrated in FIG. 11.

At step S1101, the network device configures the PUCCH resource and the PUSCH resource.

At step S1102, the network device sends a message indicating the configured PUCCH resource and PUSCH resource.

Herein, the message may include DL grant, UL grant, semi-static signaling, DCI trigger signaling, or the like.

At step S 1103, the terminal device determines the PUCCH resource and the PUSCH resource based on the received message, and determines whether the PUCCH resource and the PUSCH resource overlap in the time domain.

At step S1104, when the PUCCH resource and the PUSCH resource overlap in the time domain, the terminal device determines the transmission manner for the PUCCH and the PUSCH.

Herein, the transmission manner may include: multiplexing the UCI of the PUCCH into the PUSCH, transmitting the PUCCH and stopping the transmission of the PUSCH, and transmitting the PUSCH and stopping the transmission of the PUCCH.

At step S 1105, the terminal device transmits at least one of the PUCCH or PDCCH based on the determined transmission manner.

At step S1106, when the PUCCH resource and the PUSCH resource overlap in the time domain, the network device determines the transmission manner for the PUCCH and the PDCCH.

At step S 1107, the network device detects and receives at least one of the PUCCH or PDCCH transmitted by the terminal based on the determined transmission manner.

In the practical application, the execution time of step S 1106 executed by the network device may also before step S 1105 and belong to the implementation behavior, and the execution time of step S 1106 is not limited in the embodiment of the present disclosure.

Next, taking the communication system being an NR/5G system and the information transmission device being a network device as an example, the method for transmitting the uplink information provided in the embodiment of the present disclosure is described by different examples.

It is to be understood that, in the method for transmitting the uplink information provided in the embodiment of the present disclosure, the terminal device and the network device have the same implementation in determining the transmission manner. Herein, the method for transmitting the uplink information provided in the embodiment of the present disclosure is described by using an example that the information transmission device is a network device.

First example

It is to be understood that in first example, the case where the UCI is multiplexed into the PUSCH is mainly described. Therefore, only the case where the UCI is multiplexed into the PUSCH is mentioned in the first example. In practice, when the PUCCH and the PUSCH overlap in the time domain, the UCI may not be multiplexed into the PUSCH, or other overlapping manners such as transmitting one channel may be used.

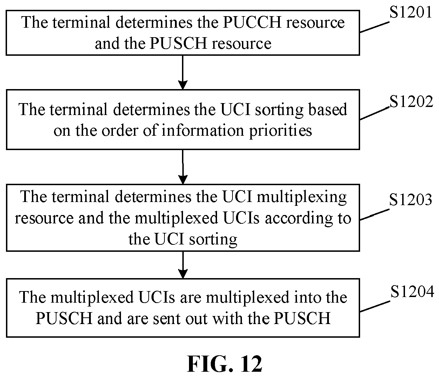

An optional method for transmitting uplink information, as illustrated in FIG. 12, includes operations at S1201 to S1204.

At S1201, the terminal determines the PUCCH resource and the PUSCH resource.

The terminal receives the DL grant sent by the network side, the DL grant is used to schedule the downlink data PDSCH and indicate the HARQ-ACK feedback resource for the PDSCH. That is, the terminal determines the PDSCH resource and the PUCCH resource based on the DL grant. The terminal receives the UL grant transmitted by the network side, and the UL grant schedules the uplink data PUSCH (indicating the PUSCH resource). That is, the terminal determines the PUSCH resource based on the UL grant.

The terminal side may also receive semi-static signaling (e.g., Configured Grant Config, and SPS-Config) and corresponding DCI trigger signaling (e.g., DCI of which CRC is scrambled by CS-RNTI) sent by the network side, and determine the PUSCH resource based on the received semi-static signaling and DCI trigger signaling. The terminal may also receive semi-static signaling (e.g., SchedulingRequestResourceConfig, or CSI-ReportConfig) sent by the network side to determine the PUCCH resource carrying SR or CSI.

When the PUCCH resource and the PUSCH resource overlap in the time domain, the UCIs carried in the PUCCH are multiplexed into the PUSCH. The overlapping of the PUCCH and the PUSCH in the time domain includes partial overlapping, inclusion (as illustrated in FIG. 8), and completely overlapping.

At S 1202, the terminal determines the UCI sorting based on the order of information priorities.

The UCI sorting may be a protocol agreement, or a network configuration.

The sorting rule for the UCI sorting may include the following rules.

First sorting rule

URLLC HARQ-ACK and URLLC SR (if present) have the highest priority.

According to the first sorting rule, the URLLC HARQ-ACK and/or URLLC SR information can be thrown away as little as possible or will not be thrown away in case that the UCI multiplexing resources are limited, thereby ensuring the normal transmission of the high-priority service.

An example of the sorting manner is as below.

Manner 1: the priority of URLLC HARQ-ACK is higher than the priority of eMBB HARQ-ACK, the priority of CSI is lower than the priority of HARQ-ACK of all service types, and the CSI sorting does not distinguish services. For example, URLLC HARQ-ACK > eMBB HARQ-ACK > CSI.

Manner 2: the priorities of all UCI types of the URLLC are higher than those of the eMBB. Therefore, all UCI types of URLLC are before eMBB. For UCIs within a service, the order of HARQ-ACK, CSI is adopted. For example, URLLC HARQ-ACK > URLLC CSI >eMBB HARQ-ACK >eMBB CSI.

Manner 3: the priority of URLLC SR and HARQ-ACK is higher than the priority of eMBB SR and HARQ-ACK, and higher than CSI.For example, eMBB SR is not transmitted when PUCCH and PUSCH overlap in time domain: URLLC SR>URLLC HARQ-ACK>eMBB HARQ-ACK>CSI, or eMBB SR is transmitted when PUCCH and PUSCH overlap in time domain: URLLC SR>URLLC HARQ-ACK>eMBB HARQ-ACK>eMBB SR>CSI. Herein, since the PUSCH includes the uplink resource request information and does not lie in the PUSCH demodulation delay, the priority of eMBB SR is not high.

The above manners are several sorting examples based on the first sorting rule, and the specific sorting manner is not limited thereto.

Second sorting rule: the priority of eMBB HARQ-ACK is higher than the priority of URLLC HARQ-ACK.

According to the second sorting rule, eMBB HARQ-ACK may be thrown away as little as possible or not be thrown away in case that the UCI multiplexing resources are limited, thereby reducing the low efficiency of redundant retransmission, especially when the eMBB data is large and the retransmission consumes more system resources.

An example of the sorting manner is as follows.

Manner 1: the priority of eMBB HARQ-ACK is higher than that of URLLC HARQ-ACK, the priority of CSI is lower than that of HARQ-ACK of all service types, and the CSI sorting does not distinguish service. For example, eMBB HARQ-ACK > URLLC HARQ-ACK > CSI.

Manner 2: the priority of URLLC SR is higher than that of eMBB HARQ-ACK, URLLC HARQ-ACK, and CSI. For example, eMBB SR: URLLC SR > eMBB HARQ-ACK>URLLC HARQ-ACK >CSI is not transmitted when PUCCHs and PUSCHs overlap in time domain, or eMBB SR: URLLC SR > eMBB HARQ-ACK>URLLC HARQ-ACK >eMBB SR >CSI is transmitted when PUCCHs and PUSCHs overlap in time domain.

Herein, since the PUSCH includes the uplink resource request information and does not lie in the PUSCH demodulation delay, the priority of eMBB SR is not high.

The above manners are several sorting examples based on the second sorting rule2, and the specific sorting manner is not limited thereto.

Third sorting rule: the terminal receives the UCI sorting information configured by the network, and configures the UCI sorting according to the received sorting information.

For example, the priority configured by the network side is: URLLC HARQ-ACK > eMBB HARQ-ACK > CSI.

In the embodiment of the present disclosure, the method that the terminal determines the information priority may include: determining the information priority corresponding to the UCI through physical layer or higher layer indication information. The physical layer may be explicitly indicated by a DCI (e.g., an indication field for the information priority in the DCI) or implicitly be indicated by the DCI (e.g., an RNTI scrambling the DCI, a search space in which the DCI is located, a physical characteristic of PUCCH or PUSCH (e.g., a number of time domain symbols, a period of periodic resources), etc.), and the higher layer indication may be indicated by an explicit indication (e.g., an indication field for information priority is added in the higher layer configuration signaling) or an implicit indication (e.g., implicitly indicated by the configuration result of other configuration parameters (e.g., a number of time domain symbols)).

At S 1203, the terminal determines the UCI multiplexing resource and the multiplexed UCIs according to the UCI sorting.

Each type (including the information priority classification) of UCI is encoded independently in sequence according to the UCI sorting at S 1202. The same type of UCIs for different services are encoded independently, which can not only meet the reliability requirements of high-reliability services, but also improve the system efficiency and avoid allocating excessive resources to low-reliability services.

The proportion of the number of REs occupied by the UCIs in all RE resources in the PUSCH is determined according to the ratio of the total payload size of the UCI (including the payload size of the CRC) to the total payload size of the uplink data. In calculating the proportion of the REs that UCIs occupied in all the RE resources in the PUSCH, different code rate compensation factors β_offset are introduced for different UCIs. Furthermore, in order to ensure the transmission of the uplink data, the UCI information does not occupy all the RE resources, which is implemented by introducing a higher layer signaling configuration parameter $\alpha$, and this parameter is used to limit the upper limit of the number of REs occupied by each type of UCI information. The UCI exceeding the upper limit is thrown away and will not be transmitted.

Herein UCIs with different types of services are independently calculated.

Taking HARQ-ACK as an example, the number of REs occupied by URLLC HARQ-ACK and eMBB HARQ-ACK is calculated through formulas (4) and (5).

$$Q'_{\mathrm{ACK}} = \min\left\{ \left\lceil \frac{\left(O_{\mathrm{URLLC,ACK}} + L_{\mathrm{URLLC,ACK}}\right) \cdot \beta^{\mathrm{PUSCH}}_{\mathrm{URLLC,offset}} \cdot \sum_{l=0}^{N^{\mathrm{PUSCH}}_{\mathrm{symb,all}}-1} M^{\mathrm{UCI}}_{\mathrm{sc}}(l)}{\sum_{r=0}^{C_{\mathrm{UL\text{-}SCH}}-1} K_r} \right\rceil, \left\lceil \alpha \cdot \sum_{l=l_0}^{N^{\mathrm{PUSCH}}_{\mathrm{symb,all}}-1} M^{\mathrm{UCI}}_{\mathrm{sc}}(l) \right\rceil \right\}$$

formula (4)

$$Q'_{\mathrm{ACK}} = \min\left\{ \left\lceil \frac{\left(O_{\mathrm{eMBB,ACK}} + L_{\mathrm{eMBB,ACK}}\right) \cdot \beta^{\mathrm{PUSCH}}_{\mathrm{eMBB,offset}} \cdot \sum_{l=0}^{N^{\mathrm{PUSCH}}_{\mathrm{symb,all}}-1} M^{\mathrm{UCI}}_{\mathrm{sc}}(l)}{\sum_{r=0}^{C_{\mathrm{UL\text{-}SCH}}-1} K_r} \right\rceil, \left\lceil \alpha \cdot \sum_{l=l_0}^{N^{\mathrm{PUSCH}}_{\mathrm{symb,all}}-1} M^{\mathrm{UCI}}_{\mathrm{sc}}(l) \right\rceil \right\}$$

formula (5).

For CSI, if the service type needs to be distinguished, the service type factor may be added, and the number of REs occupied by different service types of CSI may be calculated based on the service type factor.

For SR, the resource calculation manner is similar to that of HARQ-ACK, but the β_offset may be set independently or shared with the HARQ-ACK. Further, the SR may not be distinguished with services, that is, the resource calculation does not include the service factor.

At S1204, the multiplexed UCIs are multiplexed into the PUSCH and are sent out with the PUSCH.

The multiplexed UCIs are mapped to the PUSCH based on the resources occupied by the respective UCIs based on the operation at S1204, and are sent to the network device through the PUSCH.

Herein, the chronological order of UCIs 801 illustrated in FIG. 8 is taken as an example. As illustrated in FIG. 9, 901 is the HARQ-ACK information to be transmitted, and for the UCI sorting, it is taken that the URLLC priority is high into account. The sorting result is illustrated in 902, and 903 is the mapping result of the HARQ-ACK information actually multiplexed into the PUSCH. In order to ensure the reliability of the URLLC HARQ-ACK, the HARQ-ACK uses a low code rate and occupies multiple REs. The UCI multiplexing resources is limited by $\alpha$ to ensure the reliability of PUSCH. As illustrated in 903 of FIG. 9, only four REs are used for UCI multiplexing, resulting in only URLLC HARQ-ACK information being multiplexed, that is. eMBB HARQ-ACK is discarded. Compared with the multiplexing result illustrated in FIG. 8, the multiplexing result illustrated in FIG. 9 can preferentially ensure the transmission of HARQ-ACK information transmission of the URLLC, thereby ensuring reliable transmission and delay requirements of such high-priority services. Further, the URLLC HARQ-ACK is encoded independently, which can use a lower code rate to improve the reliability of the URLLC HARQ-ACK transmission.

Second example

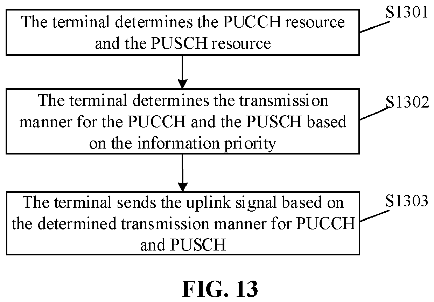

As illustrated in FIG. 13, an optional method for transmitting uplink information includes operations at S1301 to S1303.

At S1301, the terminal determines the PUCCH resource and the PUSCH resource.

The terminal receives the DL grant sent by the network side, the DL grant is used to schedule the downlink data PDSCH and indicate the HARQ-ACK feedback resource for the PDSCH. That is, the terminal determines the PDSCH resource and the PUCCH resource based on the DL grant. The terminal receives the UL grant transmitted by the network side, and the UL grant is used to schedule the uplink data PUSCH (indicating the PUSCH resource). That is, the terminal determines the PUSCH resource based on the UL grant.

The terminal side may also receive semi-static signaling (e.g., Configured Grant Config, and SPS-Config) and corresponding DCI trigger signaling (e.g., DCI of which CRC is scrambled by CS-RNTI) sent by the network side, and determine the PUSCH resource based on the received semi-static signaling and DCI trigger signaling. The terminal may also receive semi-static signaling (e.g., SchedulingRequestResourceConfig, or CSI-ReportConfig) sent by the network side to determine the PUCCH resource carrying SR or CSI.

When the PUCCH resource and the PUSCH resource overlap in the time domain, the UCIs carried in the PUCCH are multiplexed into the PUSCH. As illustrated in FIG. 5, the overlapping of the PUCCH and the PUSCH in the time domain includes partial overlapping, inclusion, and completely overlapping.

At S1302, the terminal determines the transmission manner for the PUCCH and the PUSCH based on the information priority.

The determining manner that the terminal determines the transmission manner for the PUCCH and PUSCH based on the information priority includes, but is not limited to, the following two manners.

First determining manner: the terminal determines, based on the first condition, whether the UCIs are multiplexed into the PUSCH for transmission or only one channel is transmitted. If only one channel is transmitted, the terminal determines which channel is to be transmitted based on the second condition.

The first condition may be a timing requirement, and the setting principle for the timing requirement is to ensure that the PUSCH has sufficient preparation time, and that the HARQ-ACK has sufficient determination time. That is, there is enough time to demodulate the PDSCH, which is illustrated as "the timing requirement for the multiplexing of the PUCCH and PUSCH" in FIG. 1.

The second condition may be information priority.

The principle that the terminal selects one channel for transmission according to whether the information priorities are the same includes the following principles.

First principle: service level principle

According to the service corresponding to the information carried in the channel, the channel on which the service with high priority is located is preferentially transmitted.

Second principle: same service level, and channel level principle

When the priorities of the services carried in different channels are the same, the priority of the channel type is considered (that is, the priority of the PUCCH is higher than that of the PUSCH), so that the transmission of the high-reliability service is preferentially guaranteed.

The priority of the service may be a protocol agreement. For example, the priority of URLLC is always high. The priority of the service may also be configured by a network. For example, the terminal receives the information priority message configured by the network, and preferentially transmits the information related to the eMBB when the network side configures the eMBB with a high priority.

For example, as illustrated in FIG. 2, when T2<N2+1, that is, the second timing requirement is not met, the terminal selects one channel for transmission.

Case 1: the terminal determines that the data carried in the PUSCH is URLLC data, and the PUCCH is feedback for eMBB, then the terminal transmits the PUSCH and does not transmit the PUCCH (service level principle is used).

Case 2: the terminal determines that the data carried in the PUSCH is URLLC data, and the PUCCH is feedback for URLLC, then the terminal transmits the PUCCH and stops the transmission of PUSCH (the service level is the same, and the channel level principle is used).

Case 3: the terminal determines that the data carried in the PUSCH is eMBB data, and the PUCCH is feedback for URLLC, then the terminal transmits the PUCCH and stops the transmission of PUSCH (service level principle is used).

When the PUSCH transmission is stopped, the PUSCH may be completely or partially stopped, which includes the following three stopping modes.

Stopping manner 1: the transmission of the entire PUSCH is stopped.

Stopping manner 2: the PUSCH transmission is stopped only in a time period during which the PUSCH and the PUCCH overlap in time domain.

Stopping manner 3: the subsequent PUSCH transmission starting from the start position, at which the PUSCH and the PUCCH overlap in time domain, is stopped.

The stopping manner that the terminal uses may be predetermined (for example, stopping manner 1 is used) or configured by a network, or a stopping manner for the PUSCH is determined based on the third condition.

The third condition is the time point at which the terminal can determine the conflict.

When the time point at which the terminal can determine the conflict is before that for transmitting the PUSCH, the entire PUSCH transmission is stopped. Otherwise, the PUSCH transmission is partially stopped. Herein, the efficiency optimization can be achieved under condition that the third condition can be implemented by the terminal.

For example, as illustrated in FIG. 6, before the PUSCH is transmitted, since the terminal may anticipate the position of the PUCCH (the PUCCH overlaps with the PUSCH in the time domain) according to the received DL grant, when the terminal makes the decision to stop the PUSCH, the manner of stopping the entire PUSCH transmission is used. As illustrated in FIG. 7, the terminal does not receive the DL Grant until after the PUSCH transmission has started, and then finds that the PUCCH and the PUSCH overlap in the time domain, then part of the PUSCH transmission is stopped.

Second determining manner: the terminal determines which channel is to be transmitted based on only the second condition.

The second condition may be information priority. When the terminal needs to select a channel for transmission, the terminal first preferentially transmits the information with a high priority according to the service corresponding to the bearer information in the channel. The priority of the channel type is then considered, that is, the priority of PUCCH is higher than the priority of PUSCH. The priority of the service may be a protocol agreement. For example, the priority of URLLC is always high. The priority of the service may also be configured by a network. For example, the terminal receives the information priority message configured by the network, and preferentially transmits the information related to the eMBB when the network side configures the eMBB with a high priority.

At S1303, the terminal transmits the uplink signal based on the determined transmission manner for PUCCH and PUSCH.

The method for transmitting the uplink information according to an embodiment of the present disclosure has the following technical effects.

1) The resource allocation between the PUCCH and the PUSCH is balanced, and the transmission of high reliability services is preferentially ensured (URLLC priority principle).

2) The resource allocation of PUCCH and PUSCH is balanced, and the system transmission efficiency is optimized (eMBB priority principle).

3) When a channel is selected for transmission, the information priority is taken into account to ensure the priority transmission of the high-level service.

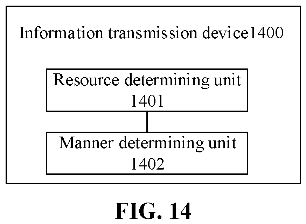

In order to implement the method for transmitting the uplink information, an embodiment of the present disclosure further provides a device for transmitting the information transmission. As illustrated in FIG. 14, the device 1400 for transmitting information includes:

a resource determining unit 1401, configured to determine whether a time domain resource of a PUCCH and a time domain resource of a PUSCH overlap;

a manner determining unit 1402, configured to, responsive to that there is an overlap between the time domain resource of the PUCCH and the time domain resource of the PUSCH, determine a transmission manner for at least one of the PUCCH or the PUSCH according to a priority parameter; herein the priority parameter includes:

an information priority of the PUCCH; or

the information priority of the PUCCH and an information priority of the PUSCH.

In the embodiment of the present disclosure, the information transmission device is a terminal device or a network device.

In the embodiment of the present disclosure, the information priority is determined according to at least one of following attribute parameters: a service type, a reliability requirement of a service, or a transmission delay requirement of the service.

In the embodiment of the present disclosure, the information priority of the PUCCH or the information priority of the PUSCH is indicated through any one of following manners:

being explicitly indicated by Downlink Control Information (DCI);

being implicitly indicated by the DCI;

being implicitly indicated by an attribute of a channel; or

being predetermined by a terminal device and a network device.

In the embodiment of the present disclosure, the manner determining unit 1402 is further configured to: when the PUCCH and the PUSCH do not satisfy a multiplexing transmission condition, determine to transmit one of the PUCCH and the PUSCH according to the information priority of the PUCCH and the information priority of the PUSCH.

In the embodiment of the present disclosure, the manner determining unit 1402 is further configured to:

when the information priority of the PUCCH is different from the information priority of the PUSCH, transmit one with a higher information priority between the PUCCH and the PUSCH; and/or

when the information priority of the PUCCH is same as the information priority of the PUSCH, determine a channel level of the PUCCH and a channel level of the PUSCH, and transmit one with a higher channel level between the PUCCH and the PUSCH.

In the embodiment of the present disclosure, when the transmission manner is to transmit a first channel of the PUCCH and the PUSCH and stop transmitting a second channel of the PUCCH and the PUSCH, a manner of stopping transmitting the second channel includes at least one of:

stopping transmitting the entire second channel;

stopping transmitting a portion of the second channel corresponding to a time period during which the second channel overlaps with the first channel in the time domain; or

stopping transmitting a portion of the second channel after a start position at which the second channel overlaps with the first channel in the time domain.

In the embodiment of the present disclosure, the manner of stopping transmitting the second channel includes:

being predetermined by a terminal device and a network device;

being configured by the network device; or

being determined according to a chronological order between a time point at which the terminal device is capable of determining a conflict and a time point for transmitting the second channel.

In the embodiment of the present disclosure, the manner determining unit 1402 is further configured to:

determining an UCI sorting according to the information priority of the PUCCH; and

multiplex UCIs in the PUCCH into the PUSCH according to the UCI sorting .

In the embodiment of the present disclosure, when the PUCCH and the PUSCH satisfy a multiplexing transmission condition, the UCIs in the PUCCH are multiplexed into the PUSCH according to the UCI sorting.

In an embodiment of the present disclosure, a sorting rule for the UCI sorting is determined through one of following manners:

being predetermined by a terminal device and a network device; or

being determined according to a sorting configuration of the network device.

In an embodiment of the present disclosure, the sorting rule for the UCI sorting includes one of:

sorting firstly according to an information priority, and sorting according to an UCI type for a same information priority; or

sorting firstly according to the UCI type, and sorting according to the information priority for a same UCI type.

In the embodiment of the present disclosure, part or all of the UCI types are distinguished with the information priority.

In the embodiment of the present disclosure, sorting according to the information priority includes:

sorting an UCI with a high information priority in front; or

sorting an UCI with a low information priority in front.

In the embodiment of the present disclosure, when the transmission manner is to multiplex the UCIs in the PUCCH into the PUSCH, a number of resource elements occupied by the UCI is obtained according to a code rate compensation factor, and the code rate compensation factor is associated with a service type of a service corresponding to an UCI.

In the embodiment of the present disclosure, code rate compensation factors corresponding to UCIs with different service types are independent; or code rate compensation factors corresponding to different types of UCIs with a same service type are shared or independent.

An embodiment of the present disclosure further provides a device for transmitting information. The device includes a processor and a memory for storing a computer program capable of being executed on the processor. The processor is configured to perform, when the computer program is executed, the steps of the method for transmitting the uplink information executed by the above-mentioned terminal device.

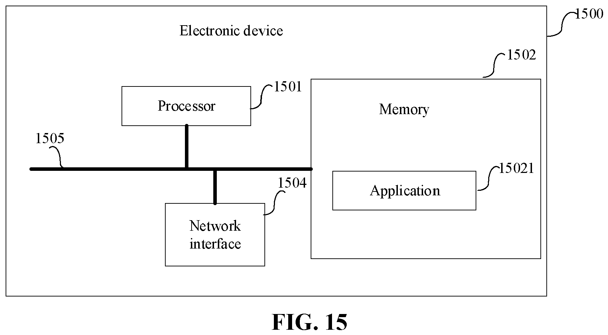

FIG. 15 is a schematic structure diagram of the hardware of an electronic device (i.e., information transmission device) according to an embodiment of the disclosure. The electronic device 1500 includes at least one processor 1501, a memory 1502, and at least one network interface 1504. The respective components of the electronic device 1500 are coupled together by a bus system 1505. It is to be understood that the bus system 1505 is for implementing the connection and communication among the components. In addition to the data bus, the bus system 1505 includes a power bus, a control bus, and a status signal bus. However, for clarity, the various buses are marked as the bus system 1505 in FIG. 15.

It is to be understood that the memory 1502 may be a volatile memory or a nonvolatile memory, or may include both the volatile memory and nonvolatile memory. The nonvolatile memory may be a ROM, a Programmable Read-Only Memory (PROM), an Erasable Programmable Read-Only Memory (EPROM), an Electrically Erasable Programmable Read-Only Memory (EEPROM), a Ferromagnetic Random Access Memory (FRAM), a Flash Memory, a magnetic surface storage, a Compact Disk (CD), or a Compact Disc Read-Only Memory (CD-ROM). The magnetic surface storage may be a disk storage or a magnetic tape storage. The volatile memory may be a Random Access Memory (RAM), and is used as an external high-speed cache. Exemplarily but unrestrictively, RAMs in various forms may be adopted, such as a Static Random Access Memory (SRAM), a Synchronous Static Random Access Memory (SSRAM), a Dynamic Random Access Memory (DRAM), a Synchronous Dynamic Random Access Memory (SDRAM), a Double Data Rate SDRAM (DDRSDRAM), an Enhanced SDRAM (ESDRAM), a SyncLink DRAM (SLDRAM) and a Direct Rambus RAM (DRRAM). The memory 1502 described in the embodiments of the disclosure is intended to include, but not limited to, memories of such types and any other proper types.

The memory 1502 in the embodiments of the disclosure is to store various types of data so as to support the operation of the electronic device 1500. Exemplarily, such data includes any computer programs for executing in the electronic device 1500, such as an application program 15021. The program for implementing the methods of the embodiments of the disclosure may be included in the application program 15021.

The methods disclosed in the above-mentioned embodiments of the disclosure may be applied to the processor 1501 or implemented by the processor 1501. The processor 1501 may be an integrated circuit with signal processing capabilities. During implementing the foregoing methods, the steps of the foregoing methods can be accomplished by integrated logic circuits in the form of hardware or by instructions in the form of software in the processor 1501. The foregoing processor 1501 may be a general-purpose processor, a Digital Signal Processor (DSP), or another programmable logic device, a discrete gate, a transistor logic device, a discrete hardware component, or the like. The processor 1501 may implement or perform the various methods, steps, and logical block diagrams described in the embodiments of the disclosure. The general-purpose processor may be a microprocessor, any conventional processors or the like.

The steps of the methods described in combination with the embodiments of the disclosure may be directly performed by the hardware decoding processor or be performed by the combination of hardware and software modules in the decoding processor. The software modules may be located in a storage medium in the memory 1502. The processor 1501 reads the information in the memory 1502, and implements the steps of the foregoing methods in combination with its hardware.

In an exemplary embodiment, the electronic device 1500 may be implemented through one or more Application Specific Integrated Circuit (ASIC), DSP, Programmable Logic Device (PLD), Complex Programmable Logic Device (CPLD), FPGA, general-purpose processor, controller, MCU, MPU, or other electronic components, to perform the aforementioned methods.

The embodiment of the disclosure also provides a computer-readable storage medium for storing a computer program.

Alternatively, the storage medium may be applied to the information transmission apparatus in the embodiment of the present disclosure, and the computer program causes the computer to execute the corresponding flow in the methods in the embodiment of the present disclosure. For brevity, details will not be elaborated herein.

The disclosure is described with reference to flowcharts and/or block diagrams of the methods, devices (systems), and computer program products according to the embodiments of the disclosure. It is to be understood that each of the processes and/or blocks in the flowcharts and/or block diagrams, and the combination of the processes and/or blocks in the flowcharts and/or block diagrams may be implemented through computer program instructions. The computer program instructions may be provided to the processor of a general-purpose computer, a special-purpose computer, an embedded processor, or other programmable data processing devices to produce a machine, such that the instructions executed by the processor of the computer or of other programmable data processing devices can produce a module for implementing the functions specified in one or more processes of the flowchart and/or in one or more blocks of the block diagram.

These computer program instructions may be also stored in a computer-readable memory that can direct a computer or other programmable data processing devices to operate in a particular manner, such that the instructions stored in the computer-readable memory produce a manufacture including the instruction device. The instruction device implements the functions specified in one or more processes of the flowcharts and/or in one or more blocks of the block diagrams.

The computer program instructions may be also loaded into a computer or other programmable data processing devices, such that a series of operation steps are performed on the computer or other programmable devices to produce the computer-implemented processes, and further the instructions executed on the computer or other programmable devices provide steps for implementing the functions specified in one or more processes of the flowcharts and/or in one or more blocks of the block diagrams.

**Claims**

1. A method for transmitting uplink information, comprising:

   determining (S401a) whether a time domain resource of a Physical Uplink Control Channel, PUCCH, and a time domain resource of a Physical Uplink Shared Channel, PUSCH, overlap in a time domain, and responsive to that there is an overlap between the time domain resource of the PUCCH and the time domain resource of the PUSCH, determining (S402a) a transmission manner for at least one of the PUCCH or the PUSCH according to a priority parameter; wherein the priority parameter comprises:
   an information priority of the PUCCH; or
   the information priority of the PUCCH and an information priority of the PUSCH,
   wherein in response to that the transmission manner is to multiplex UCIs in the PUCCH into the PUSCH, a number of resource elements occupied by UCI is obtained according to a code rate compensation factor, and **characterized in that** the code rate compensation factor is associated with a service type of a service corresponding to the UCI,
   wherein code rate compensation factors corresponding to UCIs with different service types are independent; or code rate compensation factors corresponding to different types of UCIs with a same service type are shared or independent.

2. The method of claim 1, wherein the method is performed by a terminal device or a network device.

3. The method of claim 1, wherein the information priority is determined according to at least one of following attribute parameters: a service type, a reliability requirement of a service, or a transmission delay requirement of the service;

wherein the information priority of the PUCCH or the information priority of the PUSCH is indicated through any one of following manners:

being explicitly indicated by Downlink Control Information (DCI);
being implicitly indicated by the DCI;
being implicitly indicated by an attribute of a channel; or
being predetermined by a terminal device and a network device.

4. The method of any one of claims 1-3, wherein determining (S402a) the transmission manner for at least one of the PUCCH or the PUSCH according to the information priority of the PUCCH and the information priority of the PUSCH comprises:
when the PUCCH and the PUSCH do not satisfy a multiplexing transmission condition, determining to transmit one of the PUCCH and the PUSCH according to the information priority of the PUCCH and the information priority of the PUSCH.

5. The method of claim 4, wherein determining to transmit one of the PUCCH and the PUSCH according to the information priority comprises at least one of:

when the information priority of the PUCCH is different from the information priority of the PUSCH, transmitting one with a higher information priority between the PUCCH and the PUSCH; or
when the information priority of the PUCCH is same as the information priority of the PUSCH, determining a channel level of the PUCCH and a channel level of the PUSCH, and transmitting one with a higher channel level between the PUCCH and the PUSCH, wherein the channel level represents a priority of a channel type.

6. The method of claim 4, wherein when the transmission manner is to transmit a first channel of the PUCCH and the PUSCH and stop transmitting a second channel of the PUCCH and the PUSCH, a manner of stopping transmitting the second channel comprises at least one of:

stopping transmitting an entire second channel;
stopping transmitting a portion of the second channel corresponding to a time period during which the second channel overlaps with the first channel in the time domain; or
stopping transmitting a portion of the second channel after a start position at which the second channel overlaps with the first channel in the time domain.

7. The method of claim 6, wherein the manner of stopping transmitting the second channel comprises:

being predetermined by a terminal device and a network device;
being configured by the network device; or
being determined according to a chronological order between a time point at which the terminal device is capable of determining a conflict and a time point for transmitting the second channel.

8. The method of any one of claims 1-3, wherein determining (S402a) the transmission manner for at least one of the PUCCH or the PUSCH according to the information priority of the PUCCH comprises:

determining (S1202) an Uplink Control Information (UCI) sorting according to the information priority of the PUCCH; and
multiplexing (S1203) UCIs in the PUCCH into the PUSCH according to the UCI sorting.

9. The method of claim 8, wherein when the PUCCH and the PUSCH satisfy a multiplexing transmission condition, the UCIs in the PUCCH are multiplexed into the PUSCH according to the UCI sorting.

10. The method of claim 8, wherein a sorting rule for the UCI sorting comprises one of:

sorting firstly according to an information priority, and sorting according to an UCI type for a same information priority;
sorting firstly according to the UCI type, and sorting according to the information priority for a same UCI type.

11. The method of claim 10, wherein sorting according to the information priority comprises:

sorting an UCI with a high information priority in front; or
sorting an UCI with a low information priority in front.

**12.** A device (1500) for transmitting information, comprising a processor (1501), at least one network interface (1504) and a memory (1502) for storing a computer program capable of being executed on the processor (1501), wherein the processor (1501) is configured to perform the steps of the method for transmitting the uplink information of any one of claims 1-11 when executing the computer program.

**13.** A storage medium, having stored thereon an executable program that, when executed by a processor, causes the processor to implement the method for transmitting the uplink information of any one of claims 1-11.


**Patentansprüche**

**1.** Verfahren zum Übertragen von Uplink-Informationen, umfassend:
Bestimmen (S401a), ob eine Zeitbereichsressource eines physischen Uplink-Steuerkanals, PUCCH, und eine Zeitbereichsressource eines physischen Uplink-Gemeinschaftskanals, PUSCH, in einem Zeitbereich überlappen, und als Reaktion darauf, dass eine Überlappung zwischen der Zeitbereichsressource des PUCCH und der Zeitbereichsressource des PUSCH besteht, Bestimmen (S402a) einer Übertragungsweise für zumindest einen von dem PUCCH oder dem PUSCH gemäß einem Prioritätsparameter, wobei der Prioritätsparameter umfasst:

eine Informationspriorität des PUCCH oder
die Informationspriorität des PUCCH und eine Informationspriorität des PUSCH,
wobei als Reaktion darauf, dass die Übertragungsweise darin besteht, UCIs im PUCCH in den PUSCH zu multiplexen, eine Anzahl von Ressourcenelementen, die durch UCI belegt sind, gemäß einem Coderatenkompensationsfaktor erhalten werden, und **dadurch gekennzeichnet, dass** der Coderatenkompensationsfaktor einem Diensttyp eines Diensts entsprechend den UCI zugeordnet ist,
wobei Coderatenkompensationsfaktoren entsprechend UCIs mit verschiedenen Diensttypen unabhängig sind oder
Coderatenkompensationsfaktoren entsprechend verschiedenen Typen von UCIs mit einem selben Diensttyp gemeinsam genutzt werden oder unabhängig sind.

**2.** Verfahren nach Anspruch 1, wobei das Verfahren durch eine Endvorrichtung oder eine Netzwerkvorrichtung durchgeführt wird.

**3.** Verfahren nach Anspruch 1, wobei die Informationspriorität gemäß zumindest einem von folgenden Attributparametern bestimmt wird: einem Diensttyp, einer Zuverlässigkeitsanforderung eines Diensts oder einer Übertragungsverzögerungsanforderung des Diensts;
wobei die Informationspriorität des PUCCH oder die Informationspriorität des PUSCH durch eine beliebige der folgenden Weisen angegeben wird:

durch Downlink-Steuerinformationen (DCI) explizit angegeben;
durch die DCI implizit angegeben;
durch ein Attribut eines Kanals implizit angegeben oder
durch eine Endvorrichtung und eine Netzwerkvorrichtung vorbestimmt.

**4.** Verfahren nach einem der Ansprüche 1-3, wobei das Bestimmen (S402a) der Übertragungsweise für zumindest eines des PUCCH oder des PUSCH gemäß der Informationspriorität des PUCCH und der Informationspriorität des PUSCH umfasst:
wenn der PUCCH und der PUSCH eine Multiplexübertragungsbedingung nicht erfüllen, Bestimmen, einen des PUCCH und des PUSCH gemäß der Informationspriorität des PUCCH und der Informationspriorität des PUSCH zu übertragen.

**5.** Verfahren nach Anspruch 4, wobei das Bestimmen, einen des PUCCH und des PUSCH gemäß der Informationspriorität zu übertragen, zumindest eines umfasst von:

wenn die Informationspriorität des PUCCH von der Informationspriorität des PUSCH verschieden ist, Übertragen eines mit einer höheren Informationspriorität zwischen dem PUCCH und dem PUSCH oder

wenn die Informationspriorität des PUCCH dieselbe ist wie die Informationspriorität des PUSCH, Bestimmen einer Kanalebene des PUCCH und einer Kanalebene des PUSCH und Übertragen eines mit einer höheren Kanalebene zwischen dem PUCCH und dem PUSCH, wobei die Kanalebene eine Priorität eines Kanaltyps darstellt.

6. Verfahren nach Anspruch 4, wobei, wenn die Übertragungsweise darin besteht, einen ersten Kanal des PUCCH und des PUSCH zu übertragen und das Übertragen eines zweiten Kanals des PUCCH und des PUSCH zu stoppen, eine Weise zum Stoppen des Übertragens des zweiten Kanals zumindest eines umfasst von:

Stoppen des Übertragens eines gesamten zweiten Kanals;
Stoppen des Übertragens eines Abschnitts des zweiten Kanals entsprechend einem Zeitraum, während dessen der zweite Kanal den ersten Kanal im Zeitbereich überlappt; oder
Stoppen des Übertragens eines Abschnitts des zweiten Kanals nach einer Startposition, an der der zweite Kanal den ersten Kanal im Zeitbereich überlappt.

7. Verfahren nach Anspruch 6, wobei die Weise zum Stoppen des Übertragens des zweiten Kanals umfasst:

durch eine Endvorrichtung und eine Netzwerkvorrichtung vorbestimmt;
durch die Netzwerkvorrichtung konfiguriert oder
gemäß einer chronologischen Reihenfolge zwischen einem Zeitpunkt, an dem die Endvorrichtung in der Lage ist, einen Konflikt zu bestimmen, und einem Zeitpunkt zum Übertragen des zweiten Kanals bestimmt.

8. Verfahren nach einem der Ansprüche 1-3, wobei das Bestimmen (S402a) der Übertragungsweise für zumindest eines des PUCCH oder des PUSCH gemäß der Informationspriorität des PUCCH umfasst:

Bestimmen (S1202) eines Einordnens von Uplink-Steuerinformationen (UCI) gemäß der Informationspriorität des PUCCH und
Multiplexen (S1203) von UCIs im PUCCH in den PUSCH gemäß dem Einordnen der UCI.

9. Verfahren nach Anspruch 8, wobei, wenn der PUCCH und der PUSCH eine Multiplexübertragungsbedingung erfüllen, die UCIs im PUCCH gemäß dem Einordnen der UCI in den PUSCH gemultiplext werden.

10. Verfahren nach Anspruch 8, wobei eine Einordnungsregel für das Einordnen der UCI eines umfasst von:

Einordnen zuerst gemäß einer Informationspriorität und Einordnen gemäß einem UCI-Typ für eine selbe Informationspriorität;
Einordnen zuerst gemäß dem UCI-Typ und Einordnen gemäß der Informationspriorität für einen selben UCI-Typ.

11. Verfahren nach Anspruch 10, wobei das Einordnen gemäß der Informationspriorität umfasst:

Einordnen einer UCI mit einer hohen Informationspriorität vorn oder
Einordnen einer UCI mit einer niedrigen Informationspriorität vorn.

12. Vorrichtung (1500) zum Übertragen von Informationen, umfassend einen Prozessor (1501), zumindest eine Netzwerkschnittstelle (1504) und einen Speicher (1502) zum Speichern eines Computerprogramms, das in der Lage ist, auf dem Prozessor (1501) ausgeführt zu werden, wobei der Prozessor (1501) zum Durchführen der Schritte des Verfahrens zum Übertragen der Uplink-Informationen nach einem der Ansprüche 1-11, wenn das Computerprogramm ausgeführt wird, ausgelegt ist.

13. Speichermedium, auf dem ein ausführbares Programm gespeichert ist, das, wenn es durch einen Prozessor ausgeführt wird, den Prozessor zum Implementieren des Verfahrens zum Übertragen der Uplink-Informationen nach einem der Ansprüche 1-11 veranlasst.

**Revendications**

1. Procédé pour transmettre des informations de liaison montante comprenant :
la détermination (S401a) de si une ressource de domaine temporel d'un canal physique de commande de liaison montante, PUCCH, et une ressource de domaine temporel d'un canal physique partagé de liaison montante, PUSCH, se chevauchent ou pas dans un domaine temporel et, en réponse au fait qu'il y a un chevauchement entre la ressource de domaine temporel du PUCCH et la ressource de domaine temporel du PUSCH, la détermination (S402a) d'une manière de transmission pour au moins soit le PUCCH, soit le PUSCH selon un paramètre de priorité ; ce paramètre de priorité consistant en :

une priorité des informations du PUCCH ; ou
la priorité des informations du PUCCH et une priorité des informations du PUSCH, procédé dans lequel, en réponse au fait que la manière de transmission consiste à multiplexer dans le PUSCH des informations UCI dans le PUCCH, un certain nombre d'éléments de ressources occupés par des informations UCI sont obtenus selon un facteur de compensation de débit de code, et
**caractérisé en ce que**
ce facteur de compensation de débit de code est associé à un type de service d'un service correspondant aux informations UCI,
les facteurs de compensation de débit de code correspondant à des informations UCI avec des types de services différents étant indépendants ; ou
les facteurs de compensation de débit de code correspondant à des types différents d'informations UCI avec un même type de service étant partagés ou indépendants.

2. Procédé selon la revendication 1, ce procédé étant exécuté par un dispositif terminal ou un périphérique réseau.

3. Procédé selon la revendication 1, dans lequel la priorité des informations est déterminée selon au moins un des paramètres d'attributs suivants : un type de service, une exigence de fiabilité d'un service, ou une exigence de retard de transmission du service ;
la priorité des informations du PUCCH ou la priorité des informations du PUSCH étant indiquées selon une quelconque des manières suivantes :

indiquées explicitement par des informations d'informations de commande de liaison descendante (DCI) ;
indiquées implicitement par les informations DCI ;
indiquées implicitement par un attribut d'un canal ; ou
déterminées par un dispositif terminal et un périphérique réseau.

4. Procédé selon l'une quelconque des revendications 1 à 3, dans lequel la détermination (S402a) de la manière de transmission pour au moins soit le PUCCH, soit le PUSCH selon la priorité des informations du PUCCH et la priorité des informations du PUSCH consiste en :
lorsque le PUCCH et le PUSCH ne satisfont pas à une condition de transmission par multiplexage, la détermination de transmettre soit le PUCCH, soit le PUSCH selon la priorité des informations du PUCCH et la priorité des informations du PUSCH.

5. Procédé selon la revendication 4, dans lequel la détermination de transmettre soit le PUCCH, soit le PUSCH selon la priorité des informations comprend au moins une des opérations suivantes :

lorsque la priorité des informations du PUCCH est différente de la priorité des informations du PUSCH, la transmission de celui avec une priorité des informations plus élevée entre le PUCCH et le PUSCH ; ou
lorsque la priorité des informations du PUCCH est la même que la priorité des informations du PUSCH, la détermination d'un niveau de canal du PUCCH et d'un niveau de canal du PUSCH, et la transmission de celui avec un niveau de canal plus élevé entre le PUCCH et le PUSCH, ce niveau de canal représentant une priorité d'un type de canal.

6. Procédé selon la revendication 4, dans lequel la manière de transmission consiste à transmettre un premier canal du PUCCH et du PUSCH et à arrêter de transmettre un deuxième canal du PUCCH et du PUSCH, une manière d'arrêter de transmettre le deuxième canal consistant en au moins une des opérations suivantes :

arrêter de transmettre un deuxième canal tout entier ;
arrêter de transmettre une partie du deuxième canal correspondant à une période de temps pendant laquelle le deuxième canal chevauche le premier canal dans le domaine temporel ; ou
arrêter de transmettre une partie du deuxième canal après une position de départ dans laquelle le deuxième canal chevauche le premier canal dans le domaine temporel.

**7.** Procédé selon la revendication 6, dans lequel la manière d'arrêter de transmettre le deuxième canal est :

déterminée par un dispositif terminal et un périphérique réseau ;
configurée par le périphérique réseau ; ou est
déterminée selon un ordre chronologique entre un moment auquel le dispositif terminal est capable de déterminer un conflit et un moment pour transmettre le deuxième canal.

**8.** Procédé selon l'une quelconque des revendications 1 à 3, dans lequel la détermination (S402a) de la manière de transmission pour au moins soit le PUCCH, soit le PUSCH selon la priorité des informations du PUCCH comprend :

la détermination (S1202) d'un tri d'informations de commande de liaison montante (UCI) selon la priorité des informations du PUCCH ; et
le multiplexage (S1203) dans le PUSCH d'informations UCI dans le PUCCH selon le tri des informations UCI.

**9.** Procédé selon la revendication 8, dans lequel, lorsque le PUCCH et le PUSCH satisfont à une condition de transmission par multiplexage, les informations UCI dans le PUCCH sont multiplexées dans le PUSCH selon le tri des informations UCI.

**10.** Procédé selon la revendication 8, dans lequel une règle de tri pour le tri des informations UCI consiste en une des règles suivantes :

trier tout d'abord selon une priorité des informations, et trier selon un type d'informations UCI pour une même priorité des informations ;
trier tout d'abord selon le type d'informations UCI, et trier selon la priorité des informations pour le même type d'informations UCI.

**11.** Procédé selon la revendication 10, dans lequel le tri selon la priorité des informations consiste à :

trier des informations UCI avec une priorité des informations élevée en avant ; ou
trier des informations UCI avec une priorité des informations faible en avant.

**12.** Dispositif (1500) pour transmettre des informations, comprenant un processeur (1501), au moins une interface de réseau (1504) et une mémoire (1502) pour stocker un programme informatique capable d'être exécuté sur le processeur (1501), le processeur (1501) étant configuré de façon à exécuter les étapes du procédé pour transmettre les informations de liaison montante selon l'une quelconque des revendications 1 à 11 lorsqu'il exécute le programme informatique.

**13.** Support de stockage, ayant un programme exécutable stocké sur lui qui, lorsqu'il est exécuté par un processeur, fait exécuter à ce processeur le procédé pour transmettre les informations de liaison montante selon l'une quelconque des revendications 1 à 11.

**FIG. 1**

**FIG. 2**

**300**

FIG. 3

The terminal device determines whether the time domain resource of the PUCCH and the time domain resource of the PUSCH overlap in the time domain — S401a

Responsive to that there is an overlap between the time domain resource of the PUCCH and the time domain resource of the PUSCH, the terminal device determines a transmission manner for at least one of the PUCCH or the PUSCH according to the priority parameter — S402a

The terminal device transmits the information of at least one of the PUCCH or PUSCH according to the determined transmission manner — S403a

**FIG. 4A**

The network device determines whether the time domain resource of the PUCCH and the time domain resource of the PUSCH overlap in the time domain — S401b

Responsive to that there is an overlap between the time domain resource of the PUCCH and the time domain resource of the PUSCH, the network device determines the transmission manner for at least one of the PUCCH or the PUSCH according to the priority parameter — S402b

The network device detects and receives the information sent by the terminal device according to the determined transmission manner — S403b

## FIG. 4B

FIG. 5

**FIG. 6**

**FIG. 7**

**FIG. 8**

FIG. 9

1002

| URLLC HARQ-ACK1 | URLLC HARQ-ACK2 | eMBB HARQ-ACK1 | eMBB HARQ-ACK2 |
|---|---|---|---|

| PDSCH (eMBB) | PDSCH (eMBB) | PDSCH (URLLC) | PDSCH (URLLC) |
|---|---|---|---|

1001

| URLLC HARQ-ACK 1 |
|---|
| URLLC HARQ-ACK 1 |
| URLLC HARQ-ACK 2 |
| URLLC HARQ-ACK 2 |
|  |
|  |

1003

**FIG. 10**

Terminal
device

Network
device

S1101.The network
device configures the
PUCCH resource and the
PUSCH resource

S1102.The network device sends a message indicating
the configured PUCCH resource and PUSCH resource

S1103.The terminal device determines the PUCCH
resource and the PUSCH resource based on the received
message, and determines whether the PUCCH resource
and the PUSCH resource overlap in the time domain

S1104.When the PUCCH resource and the PUSCH resource
overlap in the time domain, the terminal device determines
the transmission manner for the PUCCH and the PUSCH

S1105.The terminal device transmits at least one of the PUCCH
or PDCCH based on the determined transmission manner

S1106.When the PUCCH resource
and the PUSCH resource overlap
in the time domain, the network
device determines the
transmission manner for the
PUCCH and the PDCCH

S1107.The network device detects
and receives at least one of the
PUCCH or PDCCH sent by the
terminal based on the determined
transmission manner

**FIG. 11**

The terminal determines the PUCCH resource and the PUSCH resource — S1201

The terminal determines the UCI sorting based on the order of information priorities — S1202

The terminal determines the UCI multiplexing resource and the multiplexed UCIs according to the UCI sorting — S1203

The multiplexed UCIs are multiplexed into the PUSCH and are sent out with the PUSCH — S1204

**FIG. 12**

The terminal determines the PUCCH resource and the PUSCH resource    S1301

The terminal determines the transmission manner for the PUCCH and the PUSCH based on the information priority    S1302

The terminal sends the uplink signal based on the determined transmission manner for PUCCH and PUSCH    S1303

**FIG. 13**

Information transmission device1400

Resource determining unit
1401

Manner determining unit
1402

**FIG. 14**

**FIG. 15**

**EP 3 996 449 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **INTERDIGITAL.** UCI Enhancements for eURLLC. *R1-1907194,* 13 April 2019

- **CATT.** UL control enhancements for URLLC. *R1-1905360,* 08 April 2019